# EUROPEAN PATENT APPLICATION

(11) **EP 0 887 674 A2**
(43) Date of publication of application: **30.12.1998**
(21) Application number: 98111752.6
(22) Date of filing: 25.06.1998
(51) Int. Cl.: G02B 6/42

(54) **Optical transmitter/receiver apparatus, method for fabricating the same and optical semiconductor module**

(30) Priority: 25.06.1997 JP 168684/97; 09.09.1997 JP 243898/97
(71) Applicant: Matsushita Electric Industrial Co., Ltd., Kadoma-shi, Osaka 571-8501 (JP)
(72) Inventor: Nishikawa, Tohru, Katano-shi, Osaka 576-0021 (JP); Uno, Tomoaki, Kobe-shi, Hyogo 655-0853 (JP); Tohmon, Genji, Minoo-shi, Osaka 562-0001 (JP); Mitsuda, Masahiro, Uji-shi, Kyoto 611-0033 (JP)
(74) Representative: Grünecker, Kinkeldey, Stockmair & Schwanhäusser Anwaltssozietät

(57) **Abstract**

The optical transmitter/receiver apparatus of the invention includes: an optical fiber (130) for transmitting/receiving an optical signal therethrough; and a first base (110) including mutually spaced optical signal transmitting (110a) and receiving regions (110c) and a fiber end supporting region (110b) located between the optical signal transmitting (110a) and receiving regions (110c). A semiconductor laser device (111) for emitting the optical signal to be transmitted is secured to the optical signal transmitting region (110a) of the first base (110). A fiber end supporting portion for supporting one end of the optical fiber (130), to which the optical signal emitted from the semiconductor laser device (111) is incident, is formed in the fiber end supporting region (110b) of the first base (110). A second base (120) for supporting the body of the optical fiber (130) is secured to the optical signal receiving region (110c) of the first base (110). A reflective filter (125) for transmitting the optical signal to be transmitted, emitted from the semiconductor laser device (111), and for reflecting the optical signal to be received, incident through the other end of the optical fiber (130), is supported by being inserted into the second base (120) and the body of the optical fiber (130). A light-receiving device (112) for receiving the optical signal to be received, reflected by the reflective filter (125), is secured to the second base (120).

## Description

### BACKGROUND OF THE INVENTION

The present invention relates to an optical transmitter/receiver apparatus with integrated hybrid functions of optical reception and transmission for use in optical fiber communication for transmitting an optical signal, which has been output from a semiconductor laser device, through an optical fiber, and also relates to a method for fabricating the same. The present invention further relates to an optical semiconductor module formed by optically coupling a semiconductor laser device to an optical fiber.

In recent years, a fiber-to-the-user system for transmitting data and multi-channel image information from a center station to a home user by using an optical fiber has been proposed and the implementation of such a system is now under consideration. Such a fiber-to-the-user system requires a plurality of optical receiver apparatuses for simultaneously receiving dissimilar optical signals transmitted by wavelength division multiplexing to the terminal device of a home user and an optical transmitter apparatus for transmitting requests, data and the like from the user's terminal device to the center station.

In an optical transmitter apparatus or optical receiver apparatus used for a fiber-to-the-user system, various types of passive alignment mounting techniques are often employed for the purposes of coupling the apparatus to an optical fiber without operating a light-emitting device or a light-receiving device and thereby reducing the costs thereof.

In order to further reduce the size of such an apparatus and further enhance the performance thereof, technology for integrating optical receiver apparatus and optical transmitter apparatus in a compact package is now in great demand.

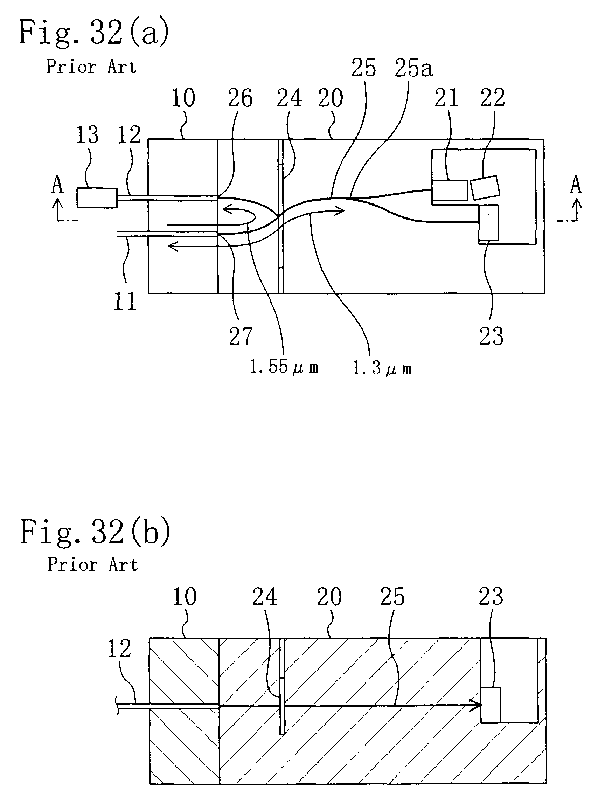

In response to such demand, an optical transmitter/receiver apparatus, in which an optical receiver apparatus and an optical transmitter apparatus are integrated in a compact package as shown in Figures **32(a)** and **32(b)**, has been suggested (see, for example, 1996 Annual Convention of Institute of Electronics, Information and Communication Engineers in Japan, SC-2-5).

Hereinafter, the conventional optical transmitter/receiver apparatus will be described with reference to Figures **32(a)** and **32(b)**.

Figure **32(a)** shows a planar structure of the conventional optical transmitter/receiver apparatus, while Figure **32(b)** shows the cross-sectional structure thereof taken along the line **A-A** of Figure **32(a)**. The conventional optical transmitter/receiver apparatus includes a fiber block **10** and a PLC (planar lightwave circuit) substrate **20** that are joined with each other. The fiber block **10** supports one end of a first optical fiber **11** for transmitting/receiving an optical signal therethrough and one end of a second optical fiber **12** for receiving an optical signal therethrough. On the other hand, the PLC substrate **20** supports: a semiconductor laser device **21** for outputting light on a wavelength band of 1.3 µm; a monitoring light-receiving device **22** for monitoring the output of the semiconductor laser device **21**; a first light-receiving device **23** for signal reception for receiving light on the wavelength band of 1.3 µm; and a WDM (wavelength division multiplexed) filter **24** for transmitting light on the wavelength band of 1.55 µm and reflecting light on the wavelength band of 1.3 µm. An optical waveguide **25** is formed inside the PLC substrate **20**. A second light-receiving device **13** for signal reception for receiving light on the wavelength band of 1.55 µm and outputting image information is connected to the other end of the second optical fiber **12** for reception.

The fiber block **10** and the PLC substrate **20** are optically coupled to each other at an output port **26** and a common port **27**. The light to be transmitted on the wavelength band of 1.3 µm, which has been output from the semiconductor laser device **21**, is passed through a Y-shaped branch **25a** of the optical waveguide **25**, the WDM filter **24** and the common port **27** so as to be output through the other end of the first optical fiber **11**. Light on the wavelength band of 1.3 µm and light on the wavelength band of 1.55 µm are input to be received through the other end of the first optical fiber **11**. The former light, i.e., light on the wavelength band of 1.3 µm, is passed through the common port **27**, the WDM filter **24** and the Y-shaped branch **25a** of the optical waveguide **25** so as to be received by the first light-receiving device **23**. The latter light, i.e., light on the wavelength band of 1.55 µm, is reflected by the WDM filter **24** and passed through the output port **26** so as to be received by the second light-receiving device **13**.

In the conventional optical transmitter/receiver apparatus, the entire coupling, except for the coupling between the first and second optical fibers **11** and **12** (which are external transmission lines) and the PLC substrate **20**, is realized by passive alignment.

The conventional optical transmitter/receiver apparatus uses the PLC substrate **20** as an optical platform. However, if a PLC substrate **20** made of silica material is used, shortening of the length of the PLC substrate **20** is restricted by the minimum bend radius of the waveguide **25**. Thus, since the PLC substrate **20** becomes rather long in the direction in which light travels, downsizing of such an optical transmitter/receiver apparatus is hard to realize. That is to say, the waveguide **25** of the PLC substrate **20** has a minimum bend radius, over which loss is caused because of difference in refractive indices between a waveguide layer and a cladding layer. If the difference between the refractive indices is increased, then the minimum bend radius can be decreased. However, in actuality, even when the difference between the refractive indices is increased up to 0.75% (which is the maximum value considering the internal loss of the waveguide and the loss resulting from the coupling with the optical fiber), the minimum bend radius cannot be decreased less than about 5 mm. Thus, in the optical transmitter/receiver apparatus shown in Figures **32(a)** and **32(b)**, the required minimum length of the PLC substrate **20** in the optical axis direction is as long as about 15 mm. Since the optical transmitter/receiver apparatus further requires the fiber coupling portion, the resulting length of the apparatus in the optical axis direction becomes 20 mm or more.

Also, in the conventional optical transmitter/receiver apparatus, the light to be received on the wavelength band of 1.55 µm, which has been input into the waveguide **25** of the PLC substrate **20**, is output through the output port **26** of the PLC substrate **20** into the second optical fiber **12** and then received by the second light-receiving device **13**. Accordingly, cost reduction and downsizing of the optical transmitter/receiver apparatus are adversely restricted.

During the assembly process of this apparatus, a cut recess is provided for the PLC substrate **20** by using a dicing saw, the WDM filter **24** is inserted into the recess, and position and angle of the WDM filter **24** are adjusted. However, since it is difficult to mount the WDM filter **24** with high accuracy, the loss of the light, which is incident through the common port **27** and then travels toward the output port **26**, disadvantageously increases.

In addition, when the fiber block **10** is joined with the PLC substrate **20**, the first optical fiber **11** and the second optical fiber **12** need to be simultaneously connected to the common port **27** and the output port **26** with high efficiency. Thus, since these parts should be aligned through active alignment, the assembly process is adversely complicated.

Furthermore, mounting process steps requiring high accuracy should be performed when the semiconductor laser device **21** is mounted onto the PLC substrate **20**, when the first light-receiving device **23** is mounted onto the PLC substrate **20**, when the monitoring light-receiving device **22** is located near the semiconductor laser device **21** and when the first and second optical fibers **11** and **12** are mounted into the PLC substrate **20**. Since the number of process steps requiring high accuracy is large, cost reduction is difficult to realize.

In an optical semiconductor module used as an optical transmitter apparatus, a concave groove having a V-shaped cross section and extending in the optical axis direction is formed in a base made of silicon and an optical fiber is installed in the concave groove. In such a manner, the optical fiber can now be mounted on the base with high accuracy.

However, as for mounting of a semiconductor laser device, it is difficult to mount the semiconductor laser device onto the base with high accuracy. This is because electrodes are formed on the semiconductor laser device and the base and the size of the semiconductor laser device is small.

Thus, technology for accurately mounting a semiconductor laser device onto a base by passive alignment is now required. A method for fabricating an optical semiconductor module such as that shown in Figure **33** is suggested by T. Hashimoto et al., MOC '95, D5, 1995.

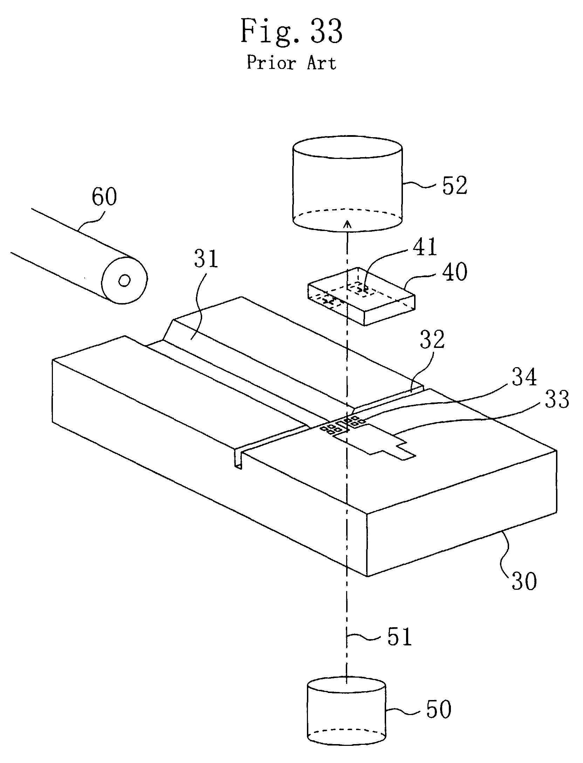

As shown in Figure **33**, a concave groove **31**, extending in the optical axis direction, for positioning a fiber and a cut recess **32** extending vertically to the optical axis are formed in a base **30** made of silicon. A wiring pattern **33** formed of an Au layer and base marks **34**, formed of an Au layer, for alignment are also provided for the base **30**. On the other hand, on the reverse surface of a semiconductor laser device **40**, a surface electrode (not shown) formed of an Au layer and laser marks **41**, formed of an Au layer, for alignment, are also formed. In such a case, the wiring pattern **33** and the base marks **34** of the base **30** are formed during the same process step. Similarly, the surface electrode and the laser marks **41** of the semiconductor laser device **40** are also formed during the same process step. Thus, no special processing is required for passive alignment.

The base **30** is aligned with the semiconductor laser device **40** by making a CCD camera **52** receive infrared rays **51**, which have been emitted from an infrared light source **50** and then transmitted through the base **30** and the semiconductor laser device **40**, and recognize the base marks **34** of the base **30** and the laser marks **41** of the semiconductor laser device **40** as images.

By installing a singlemode optical fiber **60** in the concave groove **31**, the position of the fiber **60** on a plane vertical to the optical axis is determined. And when the fiber **60** comes into contact with a stopper wall of the cut recess **32** (i.e., a wall face closer to the semiconductor laser device **40**), the position thereof in the optical axis direction is determined.

However, the conventional optical semiconductor module has the following problems.

First, a mask for forming the base marks **34** should be aligned with the concave groove **31** of the base **30** such that the base marks **34** and the concave groove **31** are located at the same position in the direction vertical to the optical axis on the plane parallel to the surface of the base **30**. However, when the mask alignment is performed, the mask always deviates to some degree. As a result, some misalignment is always caused between the base marks **34** and the concave groove **31**. Since the semiconductor laser device **40** is positioned by using the base marks **34** that are already out of alignment with the concave groove **31**, the semiconductor laser device **40** is very likely to deviate twofold with respect to the concave groove **31**.

In addition, when the CCD camera **52** receives the infrared rays **51** emitted from the infrared light source **50** and recognizes the marks as images, the CCD camera **52** simultaneously observes the base marks **34** and the laser marks **41**, which are located away from the CCD camera **52** by mutually different distances. Thus, the image of either mark is adversely defocused and recognized as a blurred image.

The finer the base marks **34** and the laser mark **41** are, the more accurate and precise alignment is realized. However, since the base marks **34** and the laser mark **41** are formed through metal vapor deposition technique, the edges of the base marks **34** and the laser marks **41** are variable on the order of microns. Thus, the image recognition cannot be performed with satisfactorily high precision.

Furthermore, the relative distance between the emission end face of the semiconductor laser device **40** and the laser marks **41** is variable on the order of several microns depending upon the cleavage precision. In the same way, the relative distance between the stopper wall face of the cut recess **32** of the base **30** and the base mark **34** is also variable on the order of several microns depending upon the formation precision of the cut recess **32**.

Moreover, according to the conventional image recognition method, mechanical adjustment is performed by recognizing the superposed pattern of the base marks **34** and the laser marks **41** as an image by the use of the infrared rays **51** emitted from the infrared light source **50**. Thus, the conventional image recognition method cannot suppress the variation in the relative position between the emission end face and the laser marks **41** of the semiconductor laser device **40** and the variation in the position where the cut recess **32** of the base **30** is formed.

Because of the various problems described above, in the conventional optical semiconductor module, a large degree of misalignment is likely to be caused between the optical axis of the semiconductor laser device and the optical axis of the optical fiber and the distance between the emission end face of the semiconductor laser device and the incidence end face of the optical fiber is also variable to a large extent.

### SUMMARY OF THE INVENTION

In view of the above-described conventional problems, a first object of the present invention is to accomplish cost reduction, downsizing and performance enhancement of an optical transmitter/receiver apparatus by providing a highly integrated optical transmitter/receiver apparatus that can be assembled easily. A second object of the present invention is to reduce the misalignment between the optical axes of a semiconductor laser device and an optical fiber and to suppress the variation in distance between the emission end face of the semiconductor laser device and the incidence end face of the optical fiber.

In order to accomplish the first object, a first optical transmitter/receiver apparatus of the present invention includes: an optical fiber for transmitting an optical signal to be transmitted and receiving an optical signal to be received therethrough; a first base including mutually spaced optical signal transmitting and receiving regions and a fiber end supporting region located between the optical signal transmitting and receiving regions; a semiconductor laser device, secured to the optical signal transmitting region of the first base, for emitting the optical signal to be transmitted; fiber end supporting means, formed in the fiber end supporting region of the first base, for supporting one end of the optical fiber, the optical signal to be transmitted that has been emitted from the semiconductor laser device being incident onto the end of the optical fiber; a second base, secured to the optical signal receiving region of the first base, for supporting the body of the optical fiber; a reflective filter, supported by being inserted into the second base and the body of the optical fiber, for transmitting the optical signal to be transmitted that has been emitted from the semiconductor laser device, and for reflecting the optical signal to be received that has been incident through the other end of the optical fiber; and a light-receiving device, secured to the second base, for receiving the optical signal to be received that has been reflected by the reflective filter.

In the first optical transmitter/receiver apparatus, the second base, supporting the body of the optical fiber, the light-receiving device and the reflective filter inserted into the body of the optical fiber, is secured to the first base, to which the semiconductor laser device has been secured and which supports one end of the optical fiber via the fiber end supporting means. Thus, it is possible to secure the second base to the first base after the second base supporting the body of the optical fiber, the light-receiving device and the reflective filter and the first base supporting the semiconductor laser device and the one end of the optical fiber have been separately formed. As a result, the assembly process can be simplified as compared with a structure in which semiconductor laser device, one end and body of an optical fiber, reflective filter and light-receiving device are all secured to a single base.

In the first optical transmitter/receiver apparatus, when the semiconductor laser device and one end of the optical fiber are secured to the first base, only the positional relationship therebetween should be considered. Similarly, when the reflective filter and the light-receiving device are secured to the second base, only the positional relationship therebetween should be considered. Thus, the semiconductor laser device and one end of the optical fiber can be secured easily, while accurately defining the positional relationship therebetween. In the same way, the reflective filter and the light-receiving device can also be secured easily, while accurately defining the positional relationship therebetween. Consequently, in the first optical transmitter/receiver apparatus, the optical axis can be adjusted on the order of submicrons through passive alignment.

In the first optical transmitter/receiver apparatus, the first base preferably includes optical-axis-direction positioning means for regulating a position of the one end of the optical fiber in an optical axis direction.

In such a case, it is possible to regulate the position of the one end of the optical fiber in the optical axis direction and the distance between the semiconductor laser device secured to the first base and the one end of the optical fiber. As a result, the coupling efficiency of the light emitted from the semiconductor laser device can be improved at the one end of the optical fiber.

In the first optical transmitter/receiver apparatus, the fiber end supporting means preferably includes on-vertical-plane positioning means for regulating a position of the one end of the optical fiber on a plane vertical to the optical axis.

In such a case, it is possible to regulate the position of the one end of the optical fiber on the plane vertical to the optical axis. As a result, the coupling efficiency of the light emitted from the semiconductor laser device can be improved at the one end of the optical fiber.

In the first optical transmitter/receiver apparatus, the on-vertical-plane positioning means preferably includes: a concave groove being formed in the fiber end supporting region of the first base so as to extend in an optical axis direction, having a pair of walls coming closer to each other in a direction from an opening to a bottom, and supporting the one end of the optical fiber; and a pressing member, secured over the concave groove of the first base, for pressing the one end of the optical fiber supported by the concave groove onto the pair of walls of the concave grooves.

In such a case, the one end of the optical fiber can be supported at three contact points, i.e., points on the pair of walls of the concave groove and on the pressing member. Thus, it is possible to accurately regulate the position of the one end of the optical fiber on the plane vertical to the optical axis.

In the first optical transmitter/receiver apparatus, the fiber end supporting means preferably includes: a concave groove, formed in the fiber end supporting region of the first base so as to extend in an optical axis direction, for supporting the one end of the optical fiber; and a resin-introducing groove, formed in the fiber end supporting region of the first base so as to extend in a direction intersecting the concave groove and to communicate with the concave groove, for introducing a supplied resin into the concave groove.

In such a case, since the resin can be introduced with certainty through the resin-introducing groove into the concave groove, the optical fiber can be secured to the concave groove with certainty.

In the first optical transmitter/receiver apparatus, the fiber end supporting means preferably includes: a concave groove, formed in the fiber end supporting region of the first base so as to extend in an optical axis direction, for supporting the one end of the optical fiber; and a resin-draining groove, formed in the fiber end supporting region of the first base so as to extend in a direction intersecting the concave groove and to communicate with the concave groove, for draining a resin supplied to the concave groove to the outside.

In such a case, the residual, redundant resin supplied to the concave groove and used for securing the optical fiber to the groove can be drained through the resin-draining groove to the outside. Thus, it is possible to prevent the overflowing resin from reaching the vicinity of the semiconductor laser device. As a result, the deterioration in characteristics of the semiconductor laser device can be prevented.

Preferably, the first optical transmitter/receiver apparatus further includes a reflective film, formed between the reflective filter and the light-receiving device, for reflecting the optical signal to be transmitted that has been emitted from the semiconductor laser device.

In such a case, it is possible to prevent the optical signal to be transmitted, which has been emitted from the semiconductor laser device, from being incident onto the light-receiving device. Thus, even when the light-receiving device is disposed in the vicinity of the semiconductor laser device, it is possible to prevent noise from being generated because of the optical signal to be transmitted.

Preferably, the first optical transmitter/receiver apparatus further includes: a wavelength selecting reflective filter, supported by being inserted into the body of the optical fiber and the second base at a position closer to the other end of the optical fiber than the reflective filter is, for transmitting the optical signal to be transmitted that has been emitted from the semiconductor laser device and for selectively reflecting an optical signal to be received on a predetermined wavelength band among a plurality of optical signals to be received on a plurality of wavelength bands, the optical signals having been incident through the other end of the optical fiber; and a second light-receiving device, secured to the second base, for receiving the optical signal to be received that has been reflected by the wavelength selecting reflective filter.

In such a case, the optical signal to be received on a predetermined wavelength band among a plurality of optical signals to be received on a plurality of wavelength bands, which have been incident through the other end of the optical fiber, is reflected by the wavelength selecting reflective filter. The reflected optical signal to be received on the predetermined wavelength band can be received by the second light-receiving device. Thus, a plurality of optical signals to be received on a plurality of wavelength bands, which have been transmitted from a center station, can be received separately.

In such an embodiment, it is more preferable to form a filter for selectively transmitting the optical signal to be received on the predetermined wavelength band between the wavelength selecting reflective filter and the second light-receiving device. Then, it is possible to prevent noise from being generated from the optical signal to be transmitted and incident onto the second light-receiving device and from the optical signals to be received on the wavelength bands other than the predetermined wavelength band.

In order to accomplish the first object, a second optical transmitter/receiver apparatus of the present invention includes: an optical fiber for transmitting an optical signal to be transmitted and receiving an optical signal to be received therethrough; a base including mutually spaced optical signal transmitting and receiving regions and a fiber end supporting region located between the optical signal transmitting and receiving regions; a semiconductor laser device, secured to the optical signal transmitting region of the base, for emitting the optical signal to be transmitted; optical-axis-direction positioning means, formed in the optical signal transmitting region of the base, for regulating a position of one end of the optical fiber in an optical axis direction, the optical signal to be transmitted that has been emitted from the semiconductor laser device being incident onto the one end; fiber end supporting means, formed in the fiber end supporting region of the base, for supporting the one end of the optical fiber, while regulating a position of the one end of the optical fiber on a plane vertical to the optical axis; fiber body supporting means, formed in the optical signal receiving region of the base, for supporting the body of the optical fiber; a reflective filter, supported by being inserted into the fiber body supporting means and the optical fiber, for transmitting the optical signal to be transmitted that has been emitted from the semiconductor laser device, and for reflecting the optical signal to be received that has been incident through the other end of the optical fiber; and a light-receiving device, secured to the optical signal receiving region of the base, for receiving the optical signal to be received that has been reflected by the reflective filter.

In the second optical transmitter/receiver apparatus, since the optical-axis-direction positioning means for regulating a position of one end of the optical fiber in an optical axis direction is formed in the optical signal transmitting region of the base, it is possible to regulate with certainty the position of the one end of the optical fiber in the optical axis direction and the distance between the semiconductor laser device secured to the first base and the one end of the optical fiber. In addition, since the fiber end supporting means for supporting the one end of the optical fiber, while regulating a position of the one end of the optical fiber on a plane vertical to the optical axis is formed in the fiber end supporting region of the base, it is possible to regulate with certainty the position of the one end of the optical fiber on the plane vertical to the optical axis.

Thus, in the second optical transmitter/receiver apparatus, it is possible to regulate the distance between the semiconductor laser device secured to the first base and the one end of the optical fiber and the position of the one end of the optical fiber on the plane vertical to the optical axis. As a result, the coupling efficiency of the light emitted from the semiconductor laser device can be improved at the one end of the optical fiber.

In the second optical transmitter/receiver apparatus, the fiber end supporting means preferably includes: a concave groove being formed in the base so as to extend in the optical axis direction, having a pair of walls coming closer to each other in a direction from an opening to a bottom, and supporting the optical fiber; and a pressing member, secured over the concave groove in the fiber end supporting region of the base, for pressing the one end of the optical fiber supported by the concave groove onto the pair of walls.

In such a case, the one end of the optical fiber can be supported at three contact points, i.e., points on the pair of walls of the concave groove and on the pressing member. Thus, it is possible to precisely regulate the position of the one end of the optical fiber on the plane vertical to the optical axis.

In order to accomplish the first object, the method for fabricating an optical transmitter/receiver apparatus according to the present invention is provided for fabricating an optical transmitter/receiver apparatus including an optical fiber for transmitting an optical signal to be transmitted and receiving an optical signal to be received therethrough. The method includes the steps of: forming a optical fiber end supporting concave groove in a fiber end supporting region of a first base, the first base having mutually spaced optical signal transmitting and receiving regions and the fiber end supporting region located between the optical signal transmitting and receiving regions, the concave groove having such a cross-sectional shape as to support one end of the optical fiber and extending in an optical axis direction; securing a semiconductor laser device, emitting the optical signal to be transmitted, onto the optical signal transmitting region of the first base; forming an optical fiber body supporting concave groove in a second base, the optical fiber body supporting concave groove having such a cross-sectional shape as to support the body of the optical fiber and extending in the optical axis direction; securing the body of the optical fiber inside the optical fiber body supporting concave groove; forming a cut recess in the second base and the body of the optical fiber, the cut recess extending in a direction vertical to the optical axis; securing a reflective filter inside the cut recess, the reflective filter transmitting the optical signal to be transmitted that has been emitted from the semiconductor laser device and incident onto the one end of the optical fiber, and reflecting the optical signal to be received that has been incident through the other end of the optical fiber; securing a light-receiving device above the optical fiber body supporting concave groove in the second base, the light-receiving device receiving the optical signal to be received that has been reflected by the reflective filter; securing the one end of the optical fiber onto the optical fiber end supporting concave groove of the first base; and securing the second base onto the optical signal receiving region of the first base, the body of the optical fiber, the reflective filter and the light-receiving device having been secured to the second base.

In the method for fabricating an optical transmitter/receiver apparatus of the present invention, either one of the step of forming the optical fiber end supporting concave groove and the step of securing the laser may precede the other.

In accordance with the method for fabricating an optical transmitter/receiver apparatus of the present invention, the second base, onto which the body of the optical fiber, the reflective filter and the light-receiving device have already been secured, is secured to the first base. Thus, the second base may be secured to the first base after the first and second bases have been formed separately. Accordingly, the assembly process can be simplified as compared with a manufacturing method in which semiconductor laser device, one end and body of the optical fiber, reflective filter and light-receiving device are secured to a single base. Consequently, an optical transmitter/receiver apparatus, allowing for the adjustment of the optical axis on the order of sub-microns through passive alignment, can be fabricated more easily and accurately.

In this method, the cut recess extending in a direction vertical to the optical axis is formed in the second base and the body of the optical fiber secured to the optical fiber body supporting concave groove of the second base, and then the reflective filter is secured into the cut recess. Thus, the reflective filter can be secured to the optical path of the optical fiber with certainty.

The reflective filter is first secured to the second base and then the light-receiving device is secured over the optical fiber body supporting concave groove of the second base. Thus, the positional relationship between the reflective filter and the light-receiving device can be regulated precisely.

The semiconductor laser device is first secured to the first base and then one end of the optical fiber is secured to the optical fiber end supporting concave groove formed in the first base. Thus, the positional relationship between the semiconductor laser device and the one end of the optical fiber can also be regulated precisely.

In the method for fabricating an optical transmitter/receiver apparatus of the present invention, the step of securing the second base preferably includes the step of securing the second base onto the optical signal receiving region of the first base, while regulating a position of the one end of the optical fiber in the optical axis direction and a position of the optical fiber on a plane vertical to the optical axis.

In such a case, it is possible to regulate the distance between the semiconductor laser device secured to the first base and the one end of the optical fiber and the position of the one end of the optical fiber on the plane vertical to the optical axis. As a result, it is possible to fabricate an optical transmitter/receiver apparatus exhibiting excellent coupling efficiency of the light emitted from the semiconductor laser device at the one end of the optical fiber.

In the method for fabricating an optical transmitter/receiver apparatus of the present invention, the step of forming the concave groove preferably includes the step of forming a resin-introducing groove in the fiber end supporting region of the first base, the resin-introducing groove extending in a direction crossing the optical fiber end supporting concave groove and communicating with the optical fiber end supporting concave groove. The step of securing the one end of the optical fiber preferably includes the step of securing the one end of the optical fiber onto the optical fiber end supporting concave groove of the first base with a resin, the resin being supplied through the resin-introducing groove into the optical fiber end supporting concave groove.

In such a case, the resin can be introduced into the optical fiber end supporting concave groove with certainty. Thus, the optical fiber can be secured with certainty.

In order to accomplish the second object, a first optical semiconductor module of the present invention includes: a base including a concave groove extending in an optical axis direction and a cut recess extending in a direction vertical to the optical axis; a semiconductor laser device, secured to the base, for emitting semiconductor laser light; an optical fiber for transmitting the laser light emitted by the semiconductor laser device therethrough, the optical fiber being installed in the concave groove of the base with an incidence end face of the optical fiber in contact with a wall of the cut recess, the wall being closer to the semiconductor laser device; and an alignment mark, formed on the base, for aligning a position of the semiconductor laser device with a position of the base. The alignment mark is formed through the same photolithography and etching processes as processes applied to the concave groove.

In the first optical semiconductor module, the alignment mark is formed through the same photolithography and etching processes as those applied to the concave groove. Thus, since no positional misalignment is caused between the alignment mark and the concave groove that are both formed on the base, the positional misalignment between the semiconductor laser device positioned using the alignment mark and the optical fiber installed in the concave groove can be reduced to a large degree. As a result, the coupling efficiency of the laser light to the optical fiber can be improved.

In the first optical semiconductor module, the alignment mark preferably include a pair of side alignment marks, the side alignment marks being formed on both sides of a region of the base, to which region the semiconductor laser device is secured, so as to be symmetrically disposed with respect to the optical axis.

In such a case, the positional misalignment between the semiconductor laser device and the base in the direction vertical to the optical axis can be reduced within a plane parallel to the surface of the base. Thus, the positional misalignment between the laser light emitted from the semiconductor laser device and the optical fiber in the direction vertical to the optical axis can be reduced within a plane parallel to the surface of the base. As a result, the coupling efficiency of the laser light to the optical fiber can be increased to a large degree.

In the first optical semiconductor module, the alignment mark preferably includes a base edge alignment mark formed on an edge portion of the wall of the cut recess of the base, the wall being closer to the semiconductor laser device.

In such a case, since the positional misalignment between the semiconductor laser device and the base in the optical axis direction and the variation in distance between the emission end face of the semiconductor laser device and the incidence end face of the optical fiber can be reduced, the distance between the emission end face of the semiconductor laser device and the incidence end face of the optical fiber can be shortened. As a result, the coupling efficiency of the laser light to the optical fiber can be increased to a large degree.

In the first optical semiconductor module, the alignment mark preferably includes: a pair of side alignment marks, the side alignment marks being formed on both sides of a region of the base, to which region the semiconductor laser device is secured, so as to be symmetrically disposed with respect to the optical axis; and a base edge alignment mark formed on an edge portion of the wall of the cut recess of the base, the wall being closer to the semiconductor laser device.

In such a case, since the positional misalignment between the laser light emitted from the semiconductor laser device and the optical fiber in the direction vertical to the optical axis can be reduced within a plane parallel to the surface of the base. In addition, the variation in distance between the emission end face of the semiconductor laser device and the incidence end face of the optical fiber can also be reduced. As a result, the coupling efficiency of the laser light to the optical fiber can be increased to an even larger degree.

Preferably, the first optical semiconductor module further includes a laser edge alignment mark, formed on an edge portion of a bottom surface of the semiconductor laser device, for aligning a position of the semiconductor laser device with a position of the base, the edge portion of the bottom surface being closer to the optical fiber.

In such a case, since the positional misalignment between the semiconductor laser device and the base in the optical axis direction and the variation in distance between the emission end face of the semiconductor laser device and the incidence end face of the optical fiber can be reduced, the distance between the emission end face of the semiconductor laser device and the incidence end face of the optical fiber can be shortened. As a result, the coupling efficiency of the laser light to the optical fiber can be increased to a large degree.

In this embodiment, the alignment mark of the base preferably includes a base edge alignment mark formed on an edge portion of the wall of the cut recess of the base, the wall being closer to the semiconductor laser device.

In such a case, since the variation in distance between the emission end face of the semiconductor laser device and the incidence end face of the optical fiber can be further reduced, the distance between the emission end face of the semiconductor laser device and the incidence end face of the optical fiber can be further shortened. As a result, the coupling efficiency of the laser light to the optical fiber can be increased to an even larger degree.

A second optical semiconductor module of the present invention includes: a base including a concave groove extending in a direction of an optical axis; a semiconductor laser device having a double channel structure, being secured to a base and emitting semiconductor laser light; an optical fiber, installed in the concave groove of the base, for transmitting the laser light emitted by the semiconductor laser device therethrough; and an alignment mark, formed on the base, for aligning a position of the semiconductor laser device with a position of the base. The alignment mark includes a convex alignment mark having a convex portion and existing between a pair of grooves each having a V-shaped cross section, the grooves being formed at positions symmetric to the optical axis in a region of the base, to which region the semiconductor laser device is secured.

In the second optical semiconductor module of the present invention, the alignment mark includes a convex alignment mark having a convex portion and existing between a pair of grooves each having a V-shaped cross section that are formed at positions symmetric to the optical axis on the base. Accordingly, the positional misalignment between the semiconductor laser device and the base in the direction vertical to the optical axis can be reduced within a plane parallel to the surface of the base. Thus, the positional misalignment between the laser light emitted from the semiconductor laser device and the optical fiber in the direction vertical to the optical axis can be reduced within a plane parallel to the surface of the base. As a result, the coupling efficiency of the laser light to the optical fiber can be increased to a large degree. In this case, since the semiconductor laser device has a double channel structure and no electrode needs to be formed in the region of the base in which the pair of grooves each having the V-shaped cross section are formed, the pair of grooves each having the V-shaped cross section can be formed.

In the second optical semiconductor module, the pair of grooves on both sides of the convex portion are formed through the same photolithography and etching processes as processes applied to the concave groove.

In such a case, since no positional misalignment is caused between the convex alignment mark and the concave groove, the positional misalignment between the semiconductor laser device located using the convex alignment mark and the optical fiber installed in the concave groove can be reduced to a large degree. As a result, the coupling efficiency of the laser light to the optical fiber can be considerably improved.

### BRIEF DESCRIPTION OF THE DRAWINGS

Figures **1(a)** and **1(b)** illustrate an optical transmitter/receiver apparatus of the first embodiment: Figure **1(a)** is a cross-sectional view thereof taken along the line **Ia-Ia** of Figure **1(b)**; and Figure **1(b)** is a plan view thereof.

Figures **2(a)** and **2(b)** illustrate the optical transmitter/receiver apparatus of the first embodiment: Figure **2(a)** is a cross-sectional view thereof taken along the line **IIa-IIa** of Figure **1(a)**; and Figure **2(b)** is a cross-sectional view thereof taken along the line **IIb-IIb** of Figure **1(a)**.

Figures **3(a)** and **3(b)** illustrate an optical transmitter/receiver apparatus of the second embodiment: Figure **3(a)** is a cross-sectional view thereof taken along the line **IIIa-** **IIIa** of Figure **3(b)**; and Figure **3(b)** is a plan view thereof.

Figure **4** is a cross-sectional view of the optical transmitter/receiver apparatus of the second embodiment taken along the line **IV-IV** of Figure **3(a)**.

Figure **5** is a plan view of an optical transmitter/receiver apparatus of the third embodiment.

Figures **6(a)** through **6(c)** illustrate the optical transmitter/receiver apparatus of the third embodiment: Figure **6(a)** is a cross-sectional view thereof taken along the line **VIa-VIa** of Figure **5**; Figure **6(b)** is a plan view illustrating a resin-draining groove of the optical transmitter/receiver apparatus of the third embodiment; and Figure **6(c)** is a perspective view illustrating the resin-draining groove.

Figures **7(a)** and **7(b)** illustrate an optical transmitter/receiver apparatus of the fourth embodiment: Figure **7(a)** is a cross-sectional view thereof; and Figure **7(b)** is a cross-sectional view thereof taken along the line **VIIb-VIIb** of Figure **7(a)**.

Figure **8(a)** is a partial cross-sectional view of an optical transmitter/receiver apparatus of the fifth embodiment; and Figure **8(b)** is a plan view illustrating the light-receiving plane of a first light-receiving device of the optical transmitter/receiver apparatus of the fifth embodiment.

Figure **9(a)** through **9(e)** illustrate the respective process steps for fabricating the optical transmitter/receiver apparatus of the first embodiment: Figures **9(a)** and **9(e)** are plan views thereof; and Figures **9(b)** through **9(d)** are cross-sectional views thereof.

Figure **10(a)** through **10(d)** illustrate the respective process steps for fabricating the optical transmitter/receiver apparatus of the first embodiment: Figure **10(a)** is a plan view thereof; Figures **10(b)** and **10(c)** are side views thereof; and Figure **10(d)** is a cross-sectional view thereof.

Figures **11(a)** through **11(e)** are side views illustrating the respective process steps for fabricating the optical transmitter/receiver apparatus of the first embodiment.

Figure **12(a)** through **12(c)** illustrate the respective process steps for fabricating the optical transmitter/receiver apparatus of the first embodiment: Figures **12(a)** and **12(c)** are cross-sectional views thereof; and Figure **12(b)** is a plan view thereof.

Figure **13** is a plan view of an optical semiconductor module of the sixth embodiment.

Figure **14** is a front view of the optical semiconductor module of the sixth embodiment.

Figure **15** is a right side view of the optical semiconductor module of the sixth embodiment.

Figures **16(a)** through **16(d)** illustrate the steps of forming a concave groove of the base and first to third base marks in the method for fabricating the optical semiconductor module of the sixth embodiment: Figures **16(a)** through **16(c)** are cross-sectional views thereof; and Figure **16(d)** is a perspective view thereof.

Figures **17(a)** through **17(c)** illustrate V-shaped grooves and pyramid shaped pit serving as the first to third base marks in the optical semiconductor module of the sixth embodiment: Figures **17(a)** and **17(b)** are plan views thereof; and Figure **17(c)** is a cross-sectional view taken along the line **XVII-XVII** of Figures **17(a)** and **17(b)**.

Figure **18** is a cross-sectional view illustrating how the V-shaped grooves and pyramid shaped pit serving as the first to third base marks are formed in the optical semiconductor module of the sixth embodiment.

Figure **19** is a plan view illustrating part of the optical semiconductor module of the sixth embodiment.

Figure **20** is a bottom view of the semiconductor laser device in the optical semiconductor module of the sixth embodiment.

Figure **21** is a plan view of the base in the optical semiconductor module of the sixth embodiment.

Figure **22** is a schematic representation of a mounting apparatus used in a method for fabricating an optical semiconductor module in the seventh embodiment.

Figure **23** is a schematic representation illustrating a step of mounting the semiconductor laser device onto the base in the method for fabricating the optical semiconductor module in the seventh embodiment.

Figures **24(a)** through **24(c)** are partial plan views of the semiconductor laser device illustrating how the semiconductor laser device is aligned with the base in the method for fabricating the optical semiconductor module in the seventh embodiment.

Figure **25** is a plan view illustrating a step of mounting the optical fiber onto the base in the method for fabricating the optical semiconductor module in the eighth embodiment.

Figures **26(a)** and **26(b)** illustrate a step of mounting the optical fiber onto the base in the method for fabricating the optical semiconductor module in the eighth embodiment: Figure **26(a)** is a front view thereof; and Figure **26(b)** is a perspective view thereof.

Figure **27** is a characteristic diagram representing the relationship between the emission angle of the semiconductor laser device and the coupling efficiency of the optical fibers using mode field diameters of the optical fibers as parameters in order to illustrate how the optical fibers are connected to each other in the ninth embodiment.

Figure **28** is a characteristic diagram representing the relationship between the distance from the semiconductor laser device to the optical fiber and the excess loss using mode field diameters of the optical fibers as parameters in order to illustrate how the optical fibers are connected to each other in the ninth embodiment.

Figure **29** is a characteristic diagram representing the relationship between the positional misalignment length of the optical axes of the semiconductor laser device and the optical fiber and the excess loss using mode field diameters of the optical fibers as parameters in order to illustrate how the optical fibers are connected to each other in the ninth embodiment.

Figure **30** is a cross-sectional view illustrating part of an optical semiconductor module of the tenth embodiment.

Figure **31** is a perspective view illustrating part of the optical semiconductor module of the tenth embodiment.

Figures **32(a)** and **32(b)** illustrate a conventional optical transmitter/receiver apparatus: Figure **32(a)** is a schematic plan view thereof; and Figure **32(b)** is a cross-sectional view thereof taken along the line **A-A** of Figure **32(a)**.

Figure **33** is a perspective view illustrating an alignment step in a conventional method for fabricating an optical semiconductor module.

### DETAILED DESCRIPTION OF THE INVENTION

### EMBODIMENT 1

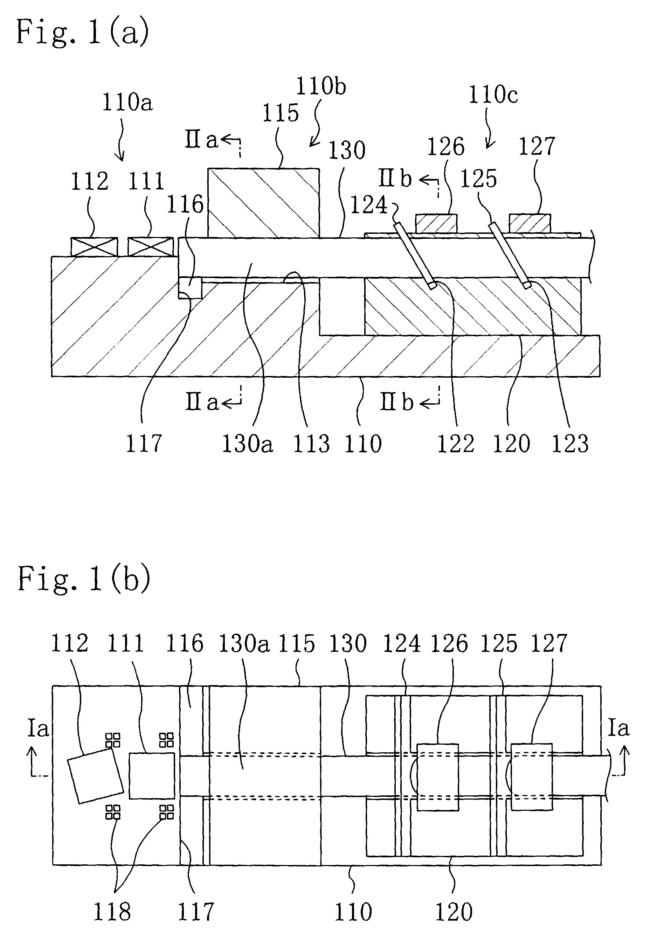

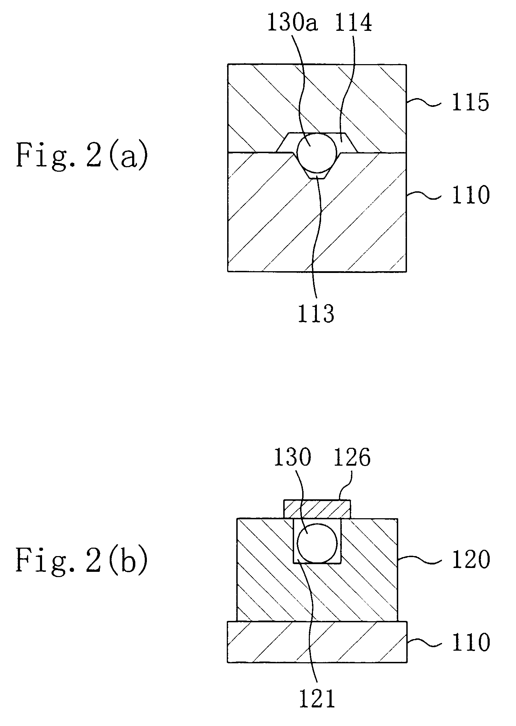

Hereinafter, an optical transmitter/receiver apparatus of the first embodiment will be described with reference to Figures **1(a)** and **1(b)** and Figures **2(a)** and **2(b)**. Figure **1(b)** illustrates a planar structure of the optical transmitter/receiver apparatus of the first embodiment. Figure **1(a)** illustrates a cross-sectional structure thereof taken along the line **Ia-Ia** of Figure **1(b)**. Figure **2(a)** illustrates a cross-sectional structure thereof taken along the line **IIa-IIa** of Figure **1(a)**. Figure **2(b)** illustrates a cross-sectional structure thereof taken along the line **IIb-IIb** of Figure **1(a)**.

In the optical transmitter/receiver apparatus of the first embodiment, a first base **110**, made of silicon, for performing optical transmission function and a second base **120**, made of GaAs, for performing optical reception function are integrated.

On an optical signal transmitting region **110a** provided on the left-hand side of the first base **110** shown in Figures **1(a)** and **1(b)**, a semiconductor laser device **111** for emitting light on the wavelength band of 1.3 µm, for example, and a monitoring light-receiving device **112** (e.g., a photodiode) for monitoring the intensity of the light emitted from the semiconductor laser device **111** are mounted. In view of the applications for fiber-to-the-user systems and the like, the wavelength of the light emitted from the semiconductor laser device **111** is preferably on the band of 1.3 µm. Preferably, the monitoring light-receiving device **112** is of a side face incident type and exhibits sufficiently high linear light receiving sensitivity on the wavelength band of the light emitted by the semiconductor laser device **111**.

As shown in Figure **1(b)**, the monitoring light-receiving device **112** is disposed to be inclined at a certain angle with respect to the optical axis so that the light reflected by the light-receiving plane of the monitoring light-receiving device **112** is not incident onto the active layer region of the semiconductor laser device **111** again.

In the upper surface of optical fiber end supporting region **110b** provided on the right hand side of the optical signal transmitting region **110a** of the first base **110**, a first concave groove **113**, having a trapezoidal cross section as shown in Figure **2(a)**, is formed so as to extend in the optical axis direction. An incident portion **130a** of a singlemode optical fiber **130** is installed in the first concave groove **113**.

The optical fiber **130** preferably has an incident end face subjected to an antireflection treatment in order to suppress the return loss of the light emitted by the semiconductor laser device **111** at a sufficiently low level. The mode field diameter of the optical fiber **130** is preferably set at an approximately equal value to the spot diameter of the semiconductor laser device **111** (enabling range is from 1.5 µm to 4.5 µm) so that the light emitted from the semiconductor laser device **111** couples at the incident end face of the optical fiber **130** at a high coupling efficiency.

Also, the distance between the semiconductor laser device **111** and the optical fiber **130** is preferably as short as possible in order that the light emitted from the semiconductor laser device **111** couples at the incident end face of the optical fiber **130** at an even higher coupling efficiency. It is noted that, in order to shorten the optical distance between the semiconductor laser device **111** and the optical fiber **130**, resin or oil having a matched refractive index may be filled between the semiconductor laser device **111** and the optical fiber **130** though not shown.

A fiber-pressing member **115** having a second concave groove **114**, the base of which is longer than that of the first concave groove **113**, is attached onto the center portion of the first base **110**. Thus, the incident portion **130a** of the optical fiber **130** is supported at three contact points, i.e., points on both wall faces of the first concave groove **113** and on the base of the second concave groove **114**. In this case, the fiber-pressing member **115** is made of a photocurable resin or a thermosetting resin having some shrinkage force. Accordingly, when the member **115** is attached to the first base **110**, the incident portion **130a** of the optical fiber **130** receives the approaching force of the fiber-pressing member **115** toward the first base **110** and is supported with certainty at the three points on both wall faces of the first concave groove **113** and on the base of the second concave groove **114**. It is noted that the second concave groove **114** of the fiber-pressing member **115** may be formed by etching or by some mechanical working with a dicing saw or the like.

On the right hand side of the optical signal transmitting region **110a** of the first base **110**, a notch portion **116** extending vertically to the optical axis is formed. The incident end face of the optical fiber **130** is in contact with a fiber stopper **117**, which is the wall face of the notch portion **116** closer to the optical signal transmitting region **110a**. The distance between the semiconductor laser device **111** and the incident end face of the optical fiber **130** is regulated by this fiber stopper **117**.

Since the incident portion **130a** of the optical fiber **130** is supported at the three points and the incident end face of the optical fiber **130** is in contact with the fiber stopper **117**, the optical axis can be adjusted on the order of submicrons through passive alignment.

The semiconductor laser device **111** and the monitoring light-receiving device **112** need to be secured to the first base **110** and be accurately aligned with respect to the center line of the first concave groove **113** and to the fiber stopper **117**. In order to improve the accuracy, alignment marks **118** are provided in the optical signal transmitting region **110a** of the first base **110**.

The second base **120** is secured onto an optical signal receiving region **110c** provided on the right hand side of the optical fiber end supporting region **110b** of the first base **110**. In the upper surface of the second base **120**, a third concave groove **121** having a square cross section is formed as shown in Figure **2(b)**. The optical fiber **130** is installed in the third concave groove **121** and secured onto the bottom of the third concave groove **121** with a resin filled into the third concave groove **121**. In this case, the optical fiber **130** is secured to the bottom of the third concave groove **121** such that some gap is produced between the optical fiber end supporting region **110b** of the first base **110** and the second base **120** when the incident end face of the optical fiber **130** comes into contact with the wall face of the notch portion **116**. As will be described later, since the optical fiber **130** is used for performing both optical transmission and reception functions, the optical axis height of the optical fiber **130** needs to be controlled accurately. Thus, the optical fiber **130** is secured to come into contact with the bottom of the third concave groove **121** over the entire length.

A first cut recess **122** being inclined with respect to the optical axis at a predetermined angle and extending vertically to the optical axis is formed in the left part of the second base **120**. A half mirror **124** for transmitting the light on the wavelength band of 1.3 µm, which is incident from the left of the optical fiber **130**, and for reflecting upward the light on the wavelength band of 1.3 µm, which is incident from the right of the optical fiber **130**, is interposed into the first cut recess **122**. On the other hand, a second cut recess **123** being inclined with respect to the optical axis at a predetermined angle and extending vertically to the optical axis is formed in the right part of the second base **120**. A WDM filter **125** for transmitting the light on the wavelength band of 1.3 µm and for reflecting upward the light on the wavelength band of 1.55 µm is interposed into the second cut recess **123**.

On the upper surface of the left part of the second base **120**, a first light-receiving device **126** for signal reception of a bottom face incident type (e.g., a photodiode) for receiving the light on the wavelength band of 1.3 µm that has been reflected by the half mirror **124** is secured. On the upper surface of the right part of the second base **120**, a second light-receiving device **127** for signal reception of a bottom face incident type (e.g., a photodiode) for receiving the light on the wavelength band of 1.55 µm that has been reflected by the WDM filter **125** is secured. In this case, the optical paths should be designed such that the light reflected by the half mirror **124** is accurately incident onto the first light-receiving device **126** and that the light reflected by the WDM filter **125** is accurately incident onto the second light-receiving device **127**. Thus, after the optical fiber **130** has been secured onto the bottom of the third concave groove **121**, the first and second cut recesses **122**, **123** are provided by dicing cutting with accurate angles and positioning accuracy. Then, the half mirror **124** and the WDM filter **125** are secured into the first and second cut recesses **122** and **123** with a resin, respectively. The first and second light-receiving devices **126** and **127** preferably exhibit sufficiently high sensitivity with respect to the wavelength band of the incident light and excellent radio frequency signal characteristics.

In the optical transmitter/receiver apparatus of the first embodiment, since the optical fiber **130** functioning as a waveguide is linear, the optical fiber **130** need not be bent unlike the conventional optical transmitter/receiver apparatus described above. In other words, no limitation is imposed on the radius of curvature of the optical fiber. In addition, the optical path of the optical signal to be received is changed by the reflective half mirror **124** and WDM filter **125**. Thus, the length of the optical transmitter/receiver apparatus in the optical axis direction is determined based on the thicknesses of the half mirror **124** and the WDM filter **125** and the bottom surface areas of the first and second light-receiving devices **126** and **127**. Thus, the length of the optical transmitter/receiver apparatus in the optical axis direction may be about 10 mm to about 12 mm, which is approximately one half as compared with the case of using a PLC substrate.

In an optical transmitter/receiver apparatus using a PLC substrate, since the function of receiving an optical signal on the wavelength band of 1.55 µm needs to be provided outside of the apparatus, the overall size of the apparatus is adversely large and an additional process step of connecting a redundant fiber needs to be performed. By contrast, in the first embodiment, since the function of receiving an optical signal on the wavelength band of 1.55 µm can also be incorporated into the body of the apparatus, the overall apparatus can be downsized.

In addition, the optical transmitter/receiver apparatus using a PLC substrate requires a port for inputting an optical signal and a port for outputting an optical signal on the wavelength band of 1.55 µm as shown in Figure **32**. Thus, the PLC substrate should be connected to the optical fibers at two points. On the other hand, in the first embodiment, since the sections for performing both optical signal reception and transmission functions are provided over a single continuous optical fiber, no optical fiber connection portion exists within the apparatus and the process step of connecting the optical fiber is no longer necessary.

Both the optical transmitter/receiver apparatus using a PLC substrate and the optical transmitter/receiver apparatus of the first embodiment, however, use a WDM filter for separating an optical signal to be received into light on the wavelength band of 1.3 µm and light on the wavelength band of 1.55 µm. Thus, the separation precision of the optical signal depends on the size of the receiving plane, to which the reflected light is incident, to a large degree. Since the optical transmitter/receiver apparatus using a PLC substrate has a structure in which the light reflected by the WDM filter is incident onto the PLC substrate, the size (i.e., the length of a side) of the rectangular receiving plane is as small as about 4 to 8 µm. Accordingly, since the WDM filter needs to be mounted such that the positional misalignment of the reflected light is not more than ±1 to 2 µm, high accuracy is required for the angle of the WDM filter and the position thereof in the optical axis direction. By contrast, in the first embodiment, the diameter of the receiving plane of the light-receiving device is as large as about 80 µm. Thus, even when the spread of the reflected light and the mounting accuracy (of about ±5 µm) of the light-receiving device are taken into consideration, far less strict mounting accuracy is required for the WDM filter.

Moreover, in the optical transmitter/receiver apparatus using a PLC substrate, the mounting accuracy values of the respective parts are as follows: the mounting accuracy between the waveguide of the PLC substrate and the semiconductor laser device is equal to or less than ±1 µm; the mounting accuracy between the semiconductor laser device and the monitoring light-receiving device is equal to or less than ±5 µm; the mounting accuracy between the waveguide of the PLC substrate and the light-receiving device is equal to or less than ±5 µm; and the mounting accuracy between the waveguide of the PLC substrate and the two optical fibers is equal to or less than ±2 µm. The accuracy required for the cut recess to which the WDM filter is inserted is as follows: the recess width accuracy is equal to or less than ±3 µm; the positioning accuracy in the optical axis direction is about ±3 µm; and the angular accuracy with respect to the optical axis about ±1 degree. By contrast, in the first embodiment, the mounting accuracy between the optical fiber and the semiconductor laser device is equal to or less than ±1 µm; the mounting accuracy between the semiconductor laser device and the monitoring light-receiving device is equal to or less than ±5 µm; and the positioning accuracy of each light-receiving device is equal to or less than ±5 µm. The accuracy required for the cut recess to which the WDM filter is inserted is as follows: the recess width accuracy is equal to or less than ±3 µm; the positioning accuracy in the optical axis direction is about ±5 to 10 µm; and the angular accuracy with respect to the optical axis about ±3 degrees.

As described above, the optical transmitter/receiver apparatus of the first embodiment needs a smaller number of parts requiring high positioning accuracy and less strict positioning accuracy than the optical transmitter/receiver apparatus using a PLC substrate. Accordingly, the optical transmitter/receiver apparatus of the first embodiment is very advantageous in view of the mass productivity thereof.

In the first embodiment, the wavelength of the light emitted from the semiconductor laser device **111** is on the band of 1.3 µm. Alternatively, the light may be on the wavelength band of 1.55 µm or on any other wavelength band.

Also, the semiconductor laser device **111** may be a laser device having a narrow emission angle or a laser device having a spot size conversion function so as to realize even higher coupling efficiency at the incident end face of the optical fiber **130**.

A silicon substrate is used as the first base **110**. Alternatively, a glass substrate or a ceramic substrate may also be used so that the first concave groove **113** is worked with higher precision. In the case of using a glass substrate or a ceramic substrate, however, the film thickness of an electrode wiring layer formed on the glass substrate or the ceramic substrate is preferably set at a large value so that the semiconductor laser device **111** is radiated efficiently. The area of the electrode wiring layer is generally larger than the bottom surface area of the semiconductor laser device **111**, and the electrode wiring layer laterally expands from the bottom of the semiconductor laser device **111**. Thus, the electrode wiring layer has radiation function. Accordingly, if the film thickness of the electrode wiring layer is increased, then the cross sectional area of the heat radiation path is also increased. As a result, the semiconductor laser device **111** can be radiated more efficiently.

A GaAs substrate is used as the second base **120**. Alternatively, a glass substrate or a ceramic substrate having excellent insulating properties may be used instead.

### EMBODIMENT 2

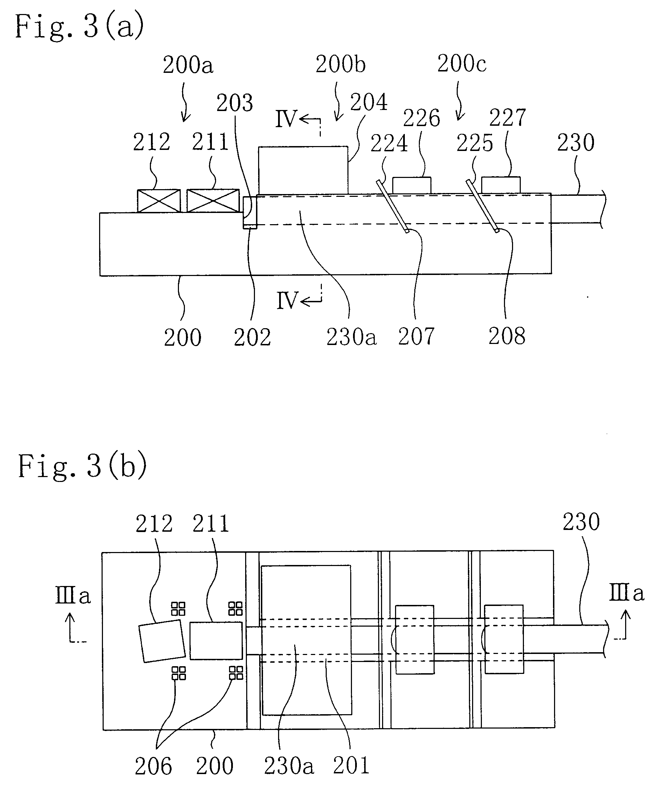

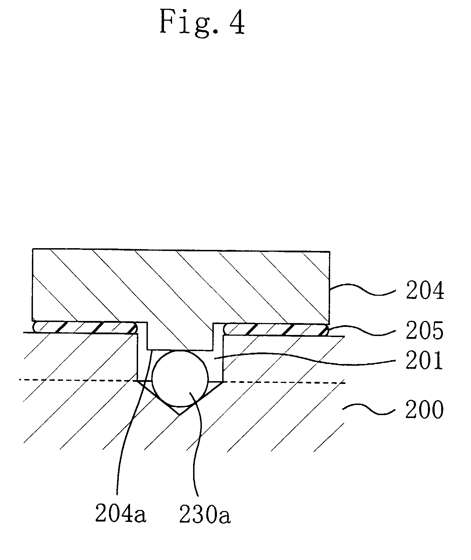

Hereinafter, an optical transmitter/receiver apparatus of the second embodiment will be described with reference to Figures **3(a)** and **3(b)** and Figure **4**. Figure **3(a)** illustrates a side structure of the optical transmitter/receiver apparatus of the second embodiment. Figure **3(b)** illustrates a planar structure of the optical transmitter/receiver apparatus of the second embodiment. Figure **4** illustrates a cross-sectional structure taken along the line **IV-IV** of Figure **3(a)**.

In the optical transmitter/receiver apparatus of the second embodiment, sections for performing optical transmission and reception functions are mounted on a base **200** made of silicon. That is to say, the base **200** has a LD/PD integrated monolithic structure.

In the left-hand part of the base **200**, an optical signal transmitting region **200a** is formed at a level lower than the other regions of the base **200** by one step, as shown in Figures **3(a)** and **3(b)**. On the optical transmitting region **200a**, a semiconductor laser device **211** for emitting light on the wavelength band of 1.3 µm, for example, and a monitoring light-receiving device **212** (e.g., a photodiode) for monitoring the intensity of the light emitted from the semiconductor laser device **211** are mounted. In view of the applications for fiber-to-the-user systems and the like, the wavelength of the light emitted from the semiconductor laser device **211** is preferably on the band of 1.3 µm. Preferably, the monitoring light-receiving device **212** is of a side face incident type and exhibits sufficiently high linear light-receiving sensitivity on the wavelength band of the light emitted by the semiconductor laser device **211**.

The optical fiber **230** preferably has an incident end face subjected to an antireflection treatment in order to suppress the return loss of the light emitted by the semiconductor laser device **211** at a sufficiently low level. The mode field diameter of the optical fiber **230** is preferably set at an approximately equal value to the spot diameter of the semiconductor laser device **211** (enabling range is from 1.5 µm to 4.5 µm) so that the light emitted from the semiconductor laser device **211** couples at the incident end face of the optical fiber **230** at a high coupling efficiency.

Also, the distance between the semiconductor laser device **211** and the optical fiber **230** is preferably as short as possible in order that the light emitted from the semiconductor laser device **211** couples at the incident end face of the optical fiber **230** at an even higher coupling efficiency. It is noted that, in order to shorten the optical distance between the semiconductor laser device **211** and the optical fiber **230**, resin or oil having a matched refractive index may be filled between the semiconductor laser device **211** and the optical fiber **230** though not shown.

As shown in Figure **3(b)**, the monitoring light-receiving device **212** is disposed to be inclined at a certain angle with respect to the optical axis so that the light reflected by the light-receiving plane of the monitoring light-receiving device **212** is not incident onto the active layer region of the semiconductor laser device **211** again.

On the part of the base **200** on the right-hand side of the optical signal transmitting region **200a**, an optical fiber end supporting region **200b** and an optical signal receiving region **200c**, which are at a level higher than that of the optical signal transmitting region **200a** by one step, are provided. All through the optical fiber end supporting region **200b** and the optical signal receiving region **200c**, a concave groove **201** having a cross section in the shape of a pentagon consisting of an upper square part and a lower triangular part, extends in the optical axis direction shown in Figure **4**. A singlemode optical fiber **230** is installed in the concave groove **201**.

On the right hand side of the optical signal transmitting region **200a** of the base **200**, a notch portion **202** extending vertically to the optical axis is formed. The incident end face of the optical fiber **230** is in contact with a fiber stopper **203**, which is the wall surface of the notch portion **202** closer to the optical signal transmitting region **200a**. The distance between the semiconductor laser device **211** and the incident end face of the optical fiber **230** is regulated by this fiber stopper **203**.

As shown in Figure **4**, a fiber-pressing member **204** having a convex portion **204a** on the lower surface thereof is secured onto the optical fiber end supporting region **200b** of the base **200** via a photocurable or thermosetting resin **205** having some shrinkage force. The incident portion **230a** of the optical fiber **230** is pressed against both wall faces of the triangular part of the concave groove **201** by the bottom surface of the convex portion **204a** of the fiber-pressing member **204**. Thus, the incident portion **230a** of the optical fiber **230** is supported at three contact points, i.e., points on both wall faces of the triangular part of the concave groove **201** and on the bottom of the convex portion **204a** of the fiber-pressing member **204**. In this case, since the fiber-pressing member **204** is secured to the base **200** via the resin **205** having some shrinkage force, the incident portion **230a** of the optical fiber **230** receives the approaching force of the fiber-pressing member **204** toward the base **200** and is supported with certainty at the three points on both walls of the triangular part of the concave groove **201** and on the bottom of the convex portion **204a** of the fiber-pressing member **204**.

It is noted that the convex portion **204a** of the fiber-pressing member **204** may be formed by etching a silicon substrate or working the substrate using a dicing saw. Alternatively, the portion may also be formed by subjecting a glass material to high temperature press working using high-precision mold or working the glass material using a dicing saw.

Since the incident portion **230a** of the optical fiber **230** is supported at the three points and the incident end face of the optical fiber **230** is in contact with the fiber stopper **203**, the optical axis can be adjusted on the order of submicrons through passive alignment. In addition, since the optical fiber **230** is secured to the concave groove **201** continuously extending through the optical fiber end supporting region **200b** and the optical signal receiving region **200c**, the height of the optical axis of the optical fiber **230** can be precisely controlled in a self aligning manner.

The semiconductor laser device **211** and the monitoring light-receiving device **212** need to be secured to the base **200** and be accurately aligned with respect to the center line of the concave groove **201** and to the fiber stopper **203**. In order to improve the accuracy, alignment marks **206** are provided in the optical signal transmitting region **200a** of the base **200**.

A first cut recess **207** being inclined with respect to the optical axis at a predetermined angle and extending vertically to the optical axis is formed in the left part of the optical signal receiving region **200c** of the base **200**. A half mirror **224** for transmitting the light on the wavelength band of 1.3 µm, which comes from the incident portion of the optical fiber **230**, and for reflecting upward the light on the wavelength band of 1.3 µm, which comes from the emission portion of the optical fiber **230**, is interposed into the first cut recess **207**. On the other hand, a second cut recess **208** being inclined with respect to the optical axis at a predetermined angle and extending vertically to the optical axis is formed in the right part of the optical signal receiving region **200c** of the base **200**. A WDM filter **225** for transmitting the light on the wavelength band of 1.3 µm and for reflecting upward the light on the wavelength band of 1.55 µm is interposed into the second cut recess **208**.

On the upper surface of the left part of the optical signal receiving region **200c** of the base **200**, a first light-receiving device **226** of a bottom face incident type (e.g., a photodiode) for receiving the light on the wavelength band of 1.3 µm that has been reflected by the half mirror **224** is secured. On the upper surface of the right part of the optical signal receiving region **200c** of the base **200**, a second light-receiving device **227** of a bottom face incident type (e.g., a photodiode) for receiving the light on the wavelength band of 1.55 µm that has been reflected by the WDM filter **225** is secured. In this case, the optical paths should be designed such that the light reflected by the half mirror **224** is accurately incident onto the first light-receiving device **226** and that the light reflected by the WDM filter **225** is accurately incident onto the second light-receiving device **227**. Thus, after the optical fiber **230** has been secured onto the bottom of the concave groove **201**, the first and second cut recesses **207**, **208** are provided by dicing cutting with accurate angles and positioning accuracy. Then, the half mirror **224** and the WDM filter **225** are secured into the first and second cut recesses **207** and **208** with a resin, respectively. The first and second light-receiving devices **226** and **227** preferably exhibit sufficiently high sensitivity with respect to the wavelength band of the incident light and excellent radio frequency signal characteristics.

In the same way as in the first embodiment, since the optical transmitter/receiver apparatus of the second embodiment needs a smaller number of parts requiring high positioning accuracy and less strict positioning accuracy than the optical transmitter/receiver apparatus using a PLC substrate, the optical transmitter/receiver apparatus is very advantageous in view of the mass productivity thereof.

In the second embodiment, the wavelength of the light emitted from the semiconductor laser device **211** is on the band of 1.3 µm. Alternatively, the light may be on the wavelength band of 1.55 µm or on any other wavelength band.

Also, the semiconductor laser device **211** may be a laser device having a narrow emission angle or a laser device having a spot size conversion function so as to realize even higher coupling efficiency at the incident end face of the optical fiber **230**.

A silicon substrate is used as the base **200**. Alternatively, a glass substrate or a ceramic substrate may also be used so that the concave groove **201** is worked with higher precision. In the case of using a glass substrate or a ceramic substrate, however, the film thickness of an electrode wiring layer formed on the glass substrate or the ceramic substrate is preferably set at a large value so that the semiconductor laser device **211** is radiated efficiently.

### EMBODIMENT 3

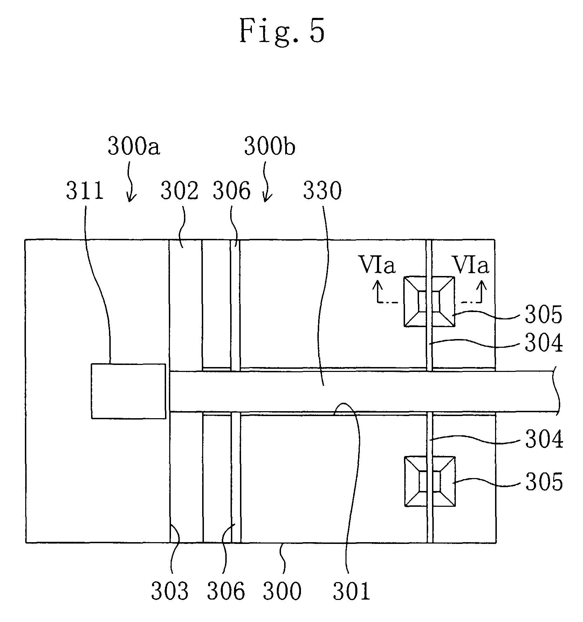

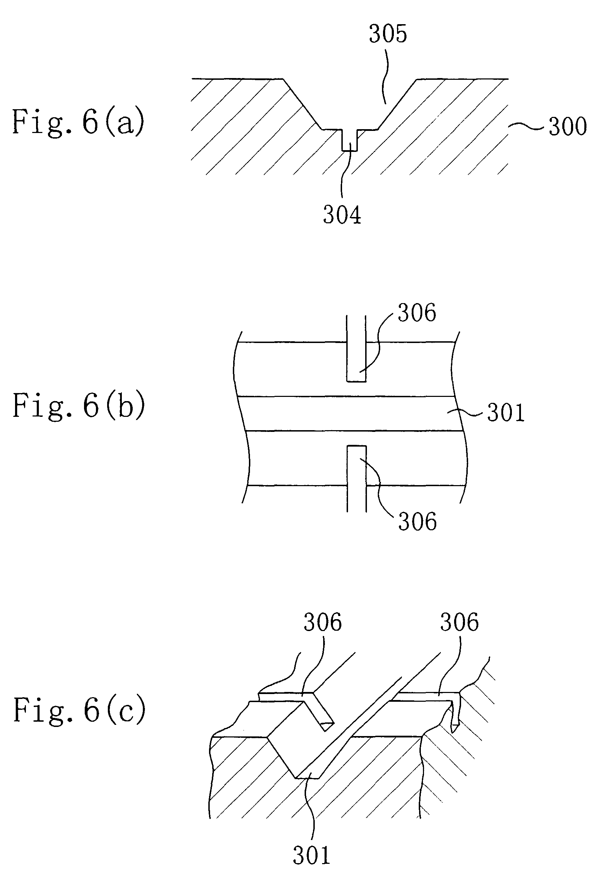

Hereinafter, an optical transmitter/receiver apparatus of the third embodiment will be described with reference to Figure **5** and Figures **6(a)** through **6(c)**. The third embodiment relates to a modified structure for securing the optical fiber **130** to the first base **110** and the second base **120** as being applicable to the first embodiment or for securing the optical fiber **230** to the base **200** as being applicable to the second embodiment.

Figure **5** illustrates a planar structure of the optical transmitter/receiver apparatus of the third embodiment. As shown in Figure **5**, a semiconductor laser device **311** is mounted on an optical signal transmitting region **300a** of a base **300**. A concave groove **301** having a trapezoidal cross section and extending in the optical axis direction is formed all through an optical fiber end supporting region **300b** and an optical signal receiving region (not shown) of the base **300**. A singlemode optical fiber **330** is installed in the concave groove **301**. On the right hand side of the optical signal transmitting region **300a** of the base **300**, a notch portion **302** extending vertically to the optical axis is formed. The incident end face of the optical fiber **330** is in contact with a fiber stopper **303**, which is the wall face of the notch portion **302** closer to the optical signal transmitting region **300a**.

As shown in Figures **5** and **6(a)**, a pair of resin supply grooves **304** are formed in the right part of the optical fiber end supporting region **300b** of the base **300**. The resin supply grooves **304** extend vertically to the optical axis and communicate with the concave groove **301**. Each of the grooves **304** has a bottom located at a higher level than that of the bottom of the concave groove **301**. In the center portion of each resin supply groove **304**, a resin supplying concave portion **305** of a trapezoidal truncated pyramid shape, having a bottom located at a higher level than that of the bottom of the resin supply groove **304**, is formed. In such a structure, when a resin having low viscosity for securing the optical fiber **330** to the base **300** is supplied to the resin supply concave portions **305**, the supplied resin passes through the resin supplying concave portions **305** and the resin supply grooves **304** into the concave groove **301**. The resin introduced into the concave groove **301** flows between the optical fiber **330** and the walls or bottom of the concave groove **301** owing to capillary action so as to secure the optical fiber **330** to the walls or bottom of the concave groove **301**.

As shown in Figure **5** and Figures **6(b)** and **6(c)**, a pair of resin-draining grooves **306** are formed in the left part of the optical fiber end supporting region **300b** of the base **300**. The resin-draining grooves **306** extend vertically to the optical axis and communicate with the concave groove **301**. Each of the grooves **306** has a bottom located at a higher level than that of the bottom of the concave groove **301**. In such a structure, the residual resin other than the resin used for securing the optical fiber **330** to the walls or bottom of the concave groove **301** is drained through the resin-draining grooves **306** to the outside. Thus, even if a great deal of resin, exceeding a required amount, is supplied, it is possible to prevent the resin from flowing through the concave groove **301** into the notch portion **302** and then into the vicinity of the semiconductor laser device **311**. In addition, since a constant amount of resin is used for securing the optical fiber **330** to the walls or bottom of the concave groove **301**, stable securing is realized.

It is noted that the resin supply grooves **304**, the resin supplying concave portions **305** and the resin-draining grooves **306** may be provided for a fiber-pressing member, as well as the base.

### EMBODIMENT 4

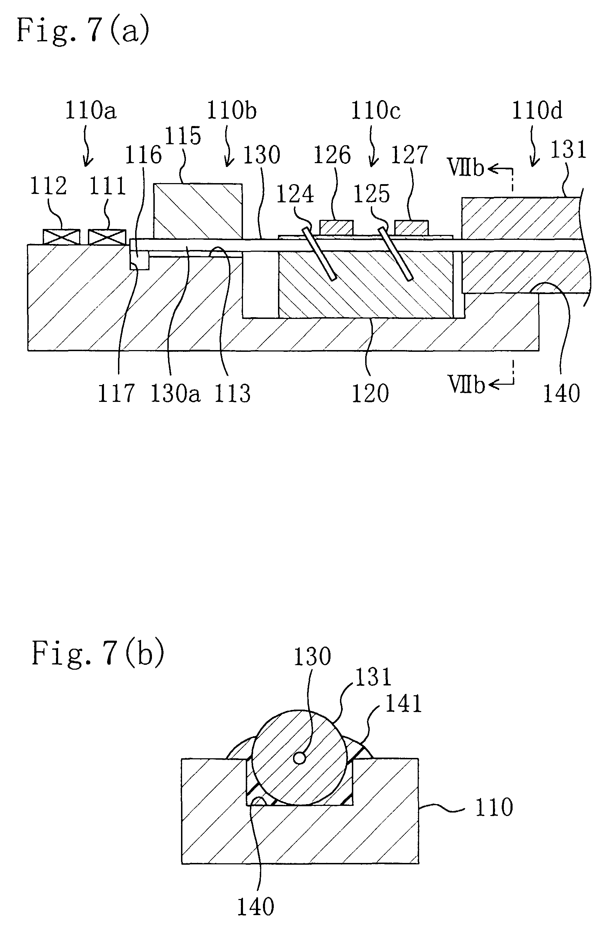

Hereinafter, an optical transmitter/receiver apparatus of the fourth embodiment will be described with reference to Figures **7(a)** and **7(b)**. The fourth embodiment is different from the first embodiment only in that a jacket **131** for the optical fiber **130** is secured to the first base **110**. Thus, the same members as those of the first embodiment are identified by the same reference numerals as those used in Figure **1(a)** and the description thereof will be omitted herein.

As shown in Figure **7(a)**, a jacket supporting region **110d**, extending from the optical signal receiving region **110c** in the opposite direction away from the semiconductor laser device **111** and being located at a level higher than that of the optical signal receiving region **110c**, is provided for the first base **110**. A fourth concave groove **140** having a rectangular cross section and extending in the optical axis direction is formed in the jacket supporting region **110d**. The jacket **131** of the optical fiber **130** is installed inside the fourth concave groove **140**. As shown in Figure **7(b)**, the jacket **131** is secured to the first base **110** via a photocurable or thermosetting resin **141**.

It is noted that the fourth concave groove **140** may be formed through working by the use of a dicing saw or through etching.

Also, a jacket supporting member provided separately from the first base **110** may be secured to the first base **110** to form the jacket supporting region **110d**.

### EMBODIMENT 5

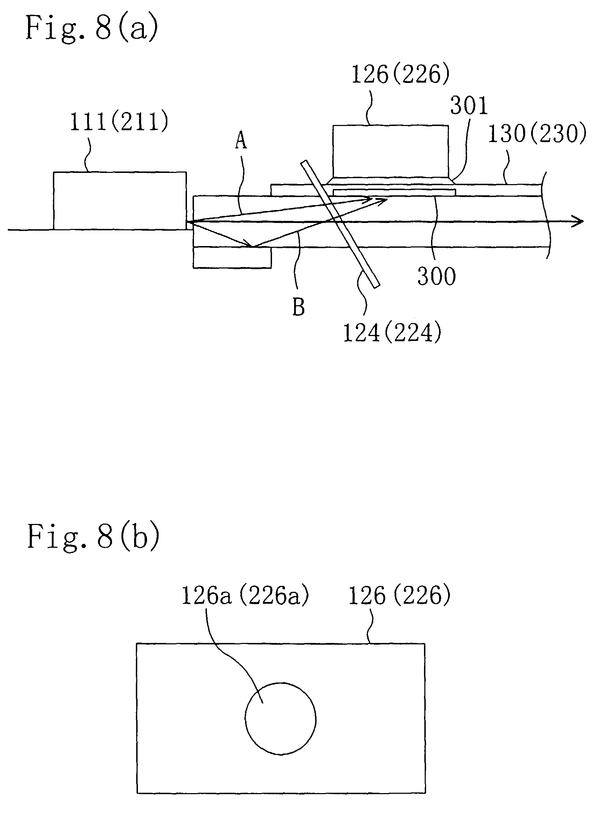

Hereinafter, an optical transmitter/receiver apparatus of the fifth embodiment will be described with reference to Figure **8(a)**. The fifth embodiment relates to a variation of the structure for clamping the first light-receiving device **126**, **226** of the first or the second embodiment. More specifically, a filter **300** for selectively transmitting the light on the wavelength band of 1.55 µm or selectively reflecting the light on the wavelength band of 1.3 µm is provided immediately under the first light-receiving device **126**, **226** and immediately above the optical fiber **130**, **230**. In Figure **8(a)**, the reference numeral **301** denotes a refractive index matched resin for securing the first light-receiving device **126**, **226** to the base.

Hereinafter, the reasons why the filter **300** is provided will be described.

In the light emitted from the semiconductor laser device **111**, **211**, the component impinging onto the interface between a core layer and a cladding layer of the optical fiber **130**, **230** at a large incidence angle penetrates through the core layer, travels to the cladding layer and then attenuates. On the other hand, the component impinging at a small incidence angle is propagated through the core layer. Thus, in a part relatively distant from the light incident end face of the optical fiber, substantially no light component penetrates through the core layer to the cladding layer. However, in a part relatively close to the light incident end face of the optical fiber, some light components penetrate through the core layer to the cladding layer. In Figure **8(a)**, the arrow **A** indicates the light component traveling directly from the semiconductor laser device **111**, **211** toward the cladding layer, and the arrow **B** indicates the light component that is emitted from the semiconductor laser device **111**, **211**, reflected by the interface between the core layer and the cladding layer and then travels to the cladding layer. If the light component indicated by the arrow **A** or **B** passes through the half mirror **124**, **224** and is incident onto the first light-receiving device **126**, **226**, then the light component becomes noise. However, if the filter **300** is provided immediately under the first light-receiving device **126**, **226**, then the component, indicated by the arrow **A** or **B**, of the light on the wavelength band of 1.3 µm that has been emitted from the semiconductor laser device **111**, **211** is removed by the filter **300**. Thus, the component is not incident onto the first light-receiving device **126**, **226**, and does not become noise. As a result, the light on the wavelength band of 1.3 µm is isolated.

Figure **8(b)** illustrates a variation of the fifth embodiment. In Figure **8(b)**, a coating layer for selectively transmitting light on the wavelength band of 1.55 µm or selectively reflecting light on the wavelength band of 1.3 µm is formed on the light-receiving plane **126a**, **226a** of the first light-receiving device **126**, **226** instead of providing the filter **300** immediately under the first light-receiving device **126**, **226**.

The first to fifth embodiments have been described as being applied to an optical transmitter/receiver apparatus for multiplexing for two wavelength bands. However, if the number of WDM filters for selectively reflecting the incident light on the respective wavelength bands is increased, then an optical transmitter/receiver apparatus for multiplexing for three or more wavelength bands can be formed. An exemplary optical transmitter/receiver apparatus for multiplexing for three or more wavelength bands will be described. For example, assume case where three different types of light on three mutually different (first, second and third) wavelength bands is transmitted from a center station. A first WDM filter for reflecting upward the light on a first wavelength band and transmitting the light on second and third wavelength bands is provided at a position of an optical fiber that is closest to the center station. A second WDM filter for reflecting upward the light on the second wavelength band and transmitting the light on the third wavelength band is provided at a position of the optical fiber that is the closest to the center station but the first WDM filter. And a half mirror for reflecting upward the light on the third wavelength band, transmitted from the center station, and transmitting the light on the third wavelength band, emitted from a semiconductor laser device, is provided at a position of the optical fiber that is farthest from the center station of the three positions. In such a case, in order to increase the light to be received on a wavelength band, the length of a base should be increased by about 1 mm to about 2 mm and an additional WDM filter and an additional light-receiving device should be provided.

### METHOD FOR FABRICATING OPTICAL TRANSMITTER-RECEIVER APPARATUS OF FIRST EMBODIMENT

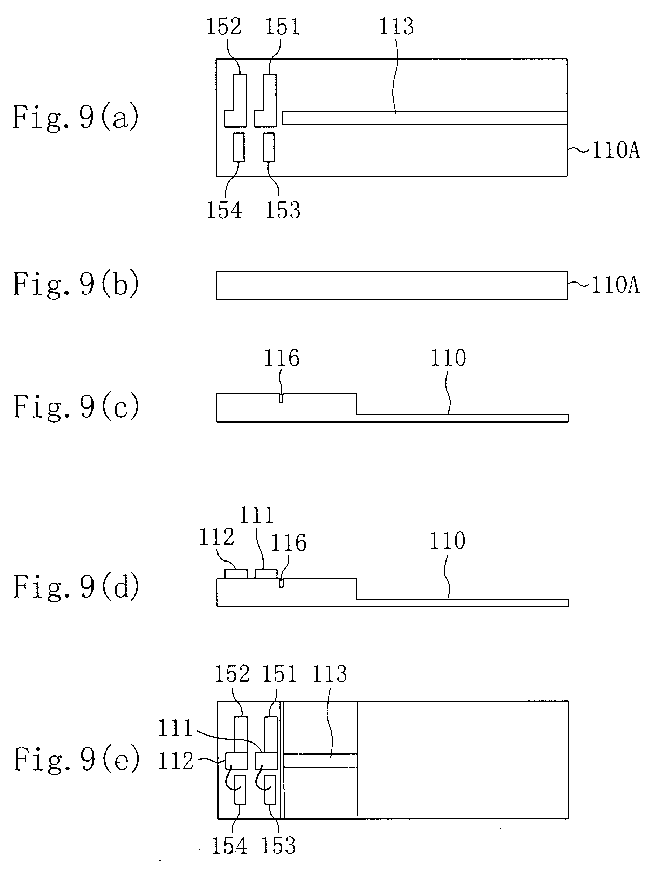

Hereinafter, a method for fabricating the optical transmitter/receiver apparatus of the first embodiment will be described with reference to Figure **9(a)** through Figure **12(c)**.

First, first and second electrode interconnections **151** and **152** and first and second top electrode pads **153** and **154** are formed on a silicon substrate **110A** such as that shown in the plan view of Figure **9(a)** and the side view of Figure **9(b)**. And a first concave groove **113** is formed in the optical fiber end supporting region and the optical signal receiving region of the silicon substrate **110A**. Thereafter, as shown in Figure **9(c)**, part of the silicon substrate **110A** corresponding to the optical signal receiving region is removed with a dicing saw and a notch portion **116** is formed on the right-hand side of the optical signal transmitting region of the silicon substrate **110A**. As a result, a first base **110** can be made of the silicon substrate **110A**.

Next, as shown in Figure **9(d)**, a semiconductor laser device **111** and a monitoring light-receiving device **112** are mounted on the first and second electrode interconnections **151** and **152**, respectively. Thereafter, the top electrode of the semiconductor laser device **111** is wire-bonded with the first top electrode pad **153** and the top electrode of the monitoring light-receiving device **112** is wire-bonded with the second top electrode pad **154**.

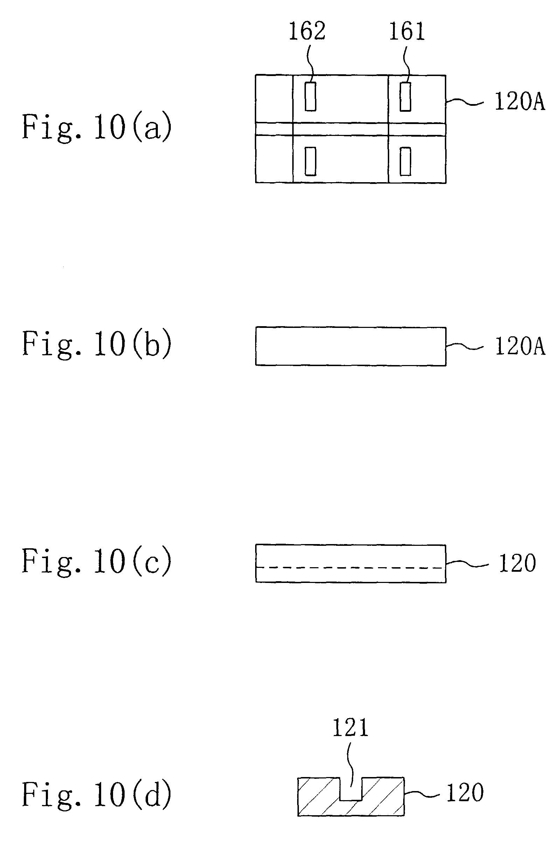

Subsequently, first and second electrode pads **161** and **162** for signal reception are formed on a GaAs substrate **120A** such as that shown in the plan view of Figure **10(a)** and in the side view of Figure **10(b)**. And marking lines are drawn in the regions where a third concave groove **121**, a first cut recess **122** and a second cut recess **123** are to be formed. Thereafter, the third concave groove **121** is formed with a dicing saw as shown in Figures **10(c)** and **10(d)**. A second base **120** is obtained in this manner.

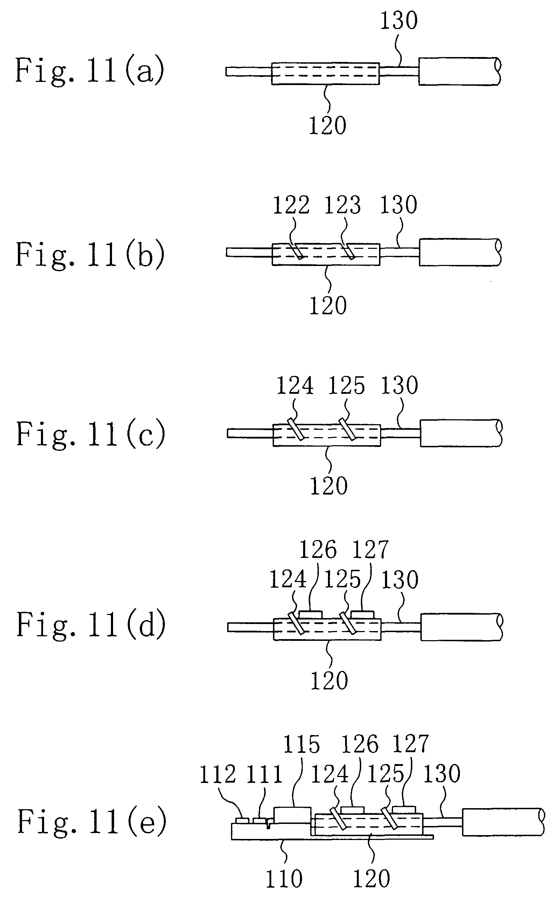

Next, as shown in Figure **11(a)**, the optical fiber **130** is installed into the third concave groove **121** of the second base **120** and secured thereto with a resin. Then, as shown in Figure **11(b)**, the first cut recess **122** and the second cut recess **123** are formed through the second base **120** and the optical fiber **130** with a dicing saw. Thereafter, as shown in Figure **11(c)**, a half mirror **124** and a WDM filter **125** are inserted into the first cut recess **122** and the second cut recess **123**, respectively, and secured thereto with a resin having a matched refractive index.

Then, as shown in Figure **11(d)**, first and second light-receiving devices **126** and **127** are mounted on the second base **120**. Subsequently, as shown in Figure **11(e)**, the second base **120** is secured to a predetermined region on the first base **110**. Thereafter, a fiber-pressing member **115** is secured to the optical fiber end supporting region of the first base **110**, thereby supporting the incident portion of the optical fiber **130**.

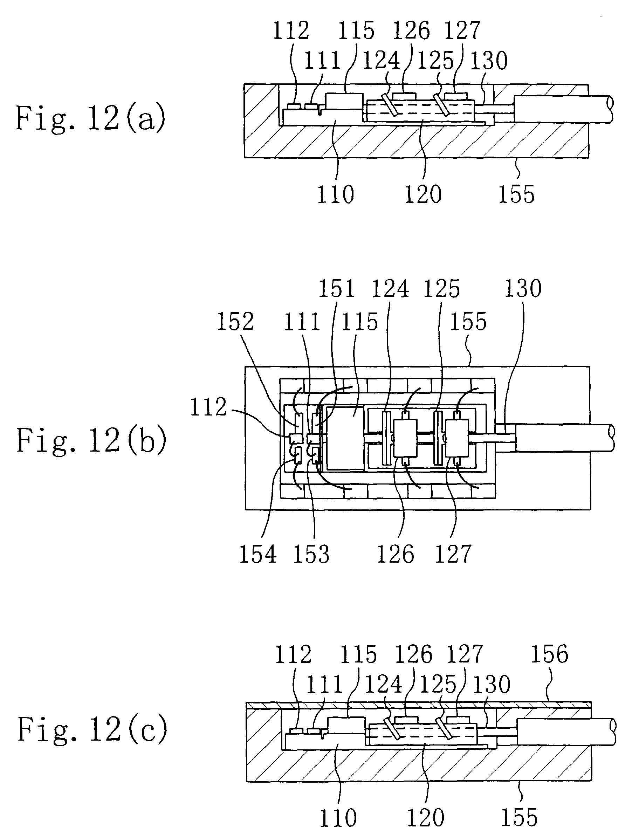

Next, as shown in Figure **12(a)**, the first base **110** is secured onto a package **155** via silver paste or the like having excellent thermal conductivity and a jacket **131** for the optical fiber **130** is secured to the package **155** with a resin. Thereafter, as shown in Figure **12(b)**, the first and second electrode interconnections **151** and **152**, the first and second top electrode pads **153** and **154**, and the first and second electrode pads **161** and **162** for signal reception are wire-bonded with the respective electrode pads formed in the package **155**.

Finally, as shown in Figure **12(c)**, a cap **156** is secured to the package **155** and sealed simply, thereby obtaining an optical transmitter/receiver apparatus.

### EMBODIMENT 6

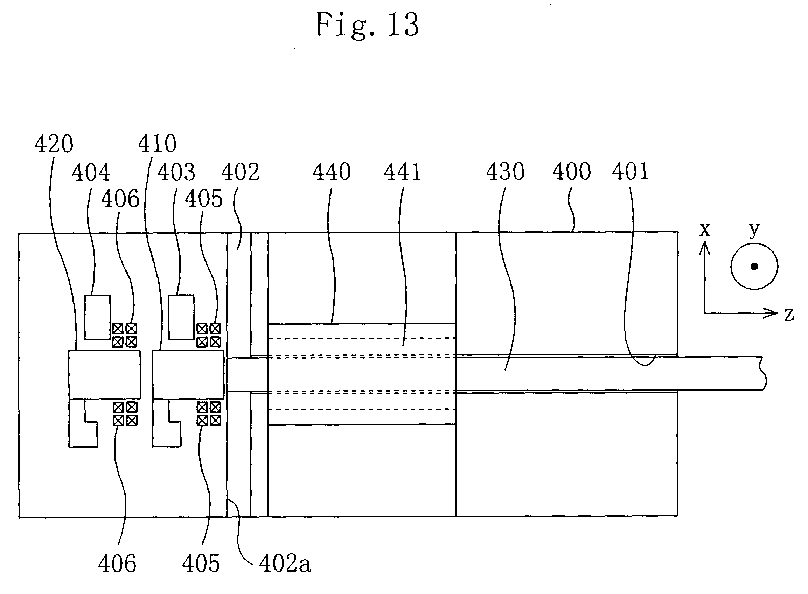

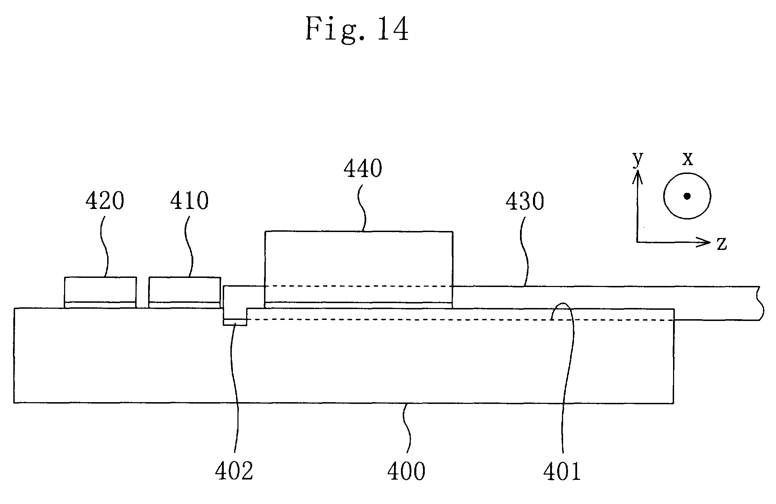

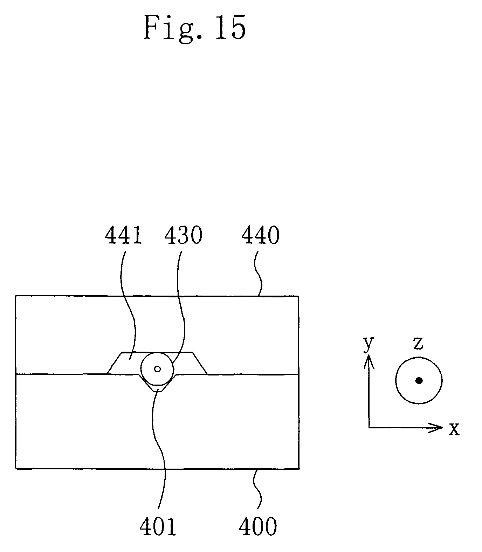

Hereinafter, the structure of an optical semiconductor module of the sixth embodiment will be described with reference to Figures **13** to **15**. Figures **13** through **15** illustrate the optical semiconductor module of the sixth embodiment: Figure **13** is a plan view thereof; Figure **14** is a front view thereof; and Figure **15** is a right side view thereof.

On the left-hand side of a base **400** made of silicon shown in Figure **13**, a semiconductor laser device **410** for emitting laser light on the wavelength band of 1.3 µm, for example, and a monitoring light-receiving device **420** (e.g., a photodiode) for monitoring the intensity of the laser light emitted from the semiconductor laser device **410** are mounted. Preferably, the monitoring light-receiving device **420** is of a waveguide type and exhibits sufficiently high linear light-receiving sensitivity on the wavelength band of the laser light emitted by the semiconductor laser device **410**.

A base concave groove **401**, having a trapezoidal cross section, is formed by etching in the base **400** so as to extend in the optical axis direction. A cut recess **402** having a rectangular cross section is formed in the base **400** by etching and dicing so as to extend vertically to the optical axis direction. A singlemode optical fiber **430** is installed in the base concave groove **401** with the end face of the optical fiber **430** in contact with a stopper wall face **402a** of the cut recess **402**.

The mode field diameter of the optical fiber **430** is preferably set at an approximately equal value to the spot diameter of the semiconductor laser device **410** (enabling range is from 1.5 µm to 4.5 µm) so that the laser light emitted from the semiconductor laser device **410** couples at the incident end face of the optical fiber **430** at a high coupling efficiency. Also, the optical fiber **430** preferably has an incident end face subjected to an antireflection treatment in order to sufficiently suppress the influence of an external resonator owing to the light reflected by the semiconductor laser device **410**.

A fiber-pressing member **440** for pressing the optical fiber **430** installed in the base concave groove **401** to the base **400** is provided over the center portion of the base **400**. A pressing member concave groove **441**, the base of which is longer than that of the base concave groove **401**, is formed by etching in the fiber-pressing member **440**. Thus, the optical fiber **430** is supported at three contact points, i.e., points on both wall faces of the base concave groove **401** and on the bottom of the pressing member concave groove **441**. In this case, the fiber-pressing member **440** is secured to the base **400** with a photocurable or thermosetting resin having some shrinkage force. Accordingly, the optical fiber **430** receives the approaching force of the fiber-pressing member **440** toward the base **400** owing to the shrinkage force of the resin and is supported with certainty at the three points on both wall faces of the base concave groove **401** and on the bottom of the pressing member concave groove **441**. Thus, the optical axis can be adjusted on the order of 0.5 µm or less through passive alignment in the direction vertical to the surface of the base **400**. In addition, since the end face of the optical fiber **430** is in contact with the stopper wall face **402a** of the cut recess **402**, the distance between the semiconductor laser device **410** and the incident end face of the optical fiber **430** can be regulated.

Also, a laser device interconnection **403** is formed by metal vapor deposition in the vicinity of the region of the base **400** where the semiconductor laser device **410** is mounted, and a light-receiving device interconnection **404** is formed by metal vapor deposition in the vicinity of the region of the base **400** where the monitoring light-receiving device **420** is mounted.

The primary feature of the sixth embodiment lies in that a pair of first base marks **405**, each mark consisting of pyramid-shaped holes, for positioning the semiconductor laser device **410** are formed at the respective positions on both sides of the region of the base **400** where the semiconductor laser device **410** is mounted so as to be symmetrical to the optical axis, and that a pair of second base marks **406**, each mark consisting of pyramid-shaped holes, for positioning the monitoring light-receiving device **420** are formed at the respective positions on both sides of the region of the base **400** where the monitoring light-receiving device **420** is mounted so as to be symmetrical to the optical axis. These base marks **405** and **406** are formed by using the same photo mask as that used for the base concave groove **401** during the same etching process.

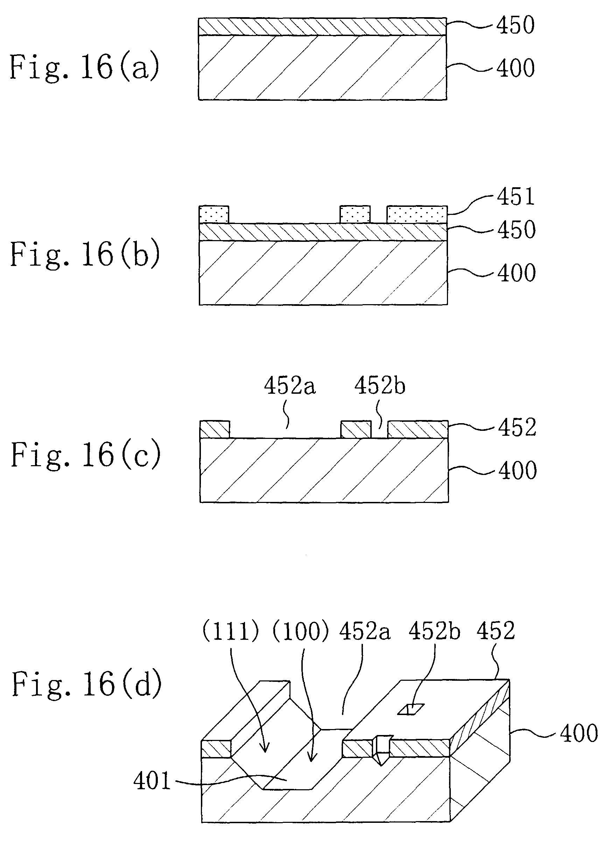

Hereinafter, a method for forming the base concave groove **401**, the first base marks **405** and the second base marks **406** by using the same photo mask during the same etching process will be described with reference to Figures **16(a)** through **16(d)**. In actuality, the first base marks **405** and the second base marks **406** are not located on neither side along the longitudinal direction of the base concave groove **401**. However, in order to simplify the illustration, the method for forming the base concave groove **401** and the base marks will be herein described by assuming that one of the first base marks **405** and the second base marks **406** is located in the vicinity of the base concave groove **401** in Figures **16(a)** through **16(d)**.

First, as shown in Figure **16(a)**, an SiO₂ film **450** is deposited over the entire surface of the base **400** made of silicon. Then, as shown in Figure **16(b)**, a resist pattern **451**, having openings in the respective regions where the base concave groove **401** and the base mark are to be formed, is formed on the SiO₂ film **450**.

Next, the SiO₂ film **450** is etched by using the resist pattern **451** as a mask, thereby forming a mask **452**, made of the SiO₂ film **450**, having a groove opening **452a** in the region where the base concave groove **401** is to be formed and a mark opening **452b** in the region where the base mark is to be formed. Then, the resist pattern **451** is removed.

Subsequently, as shown in Figure **16(d)**, the base **400** is subjected to crystal anisotropic etching using the mask **452** and a KOH group etchant. In this case, in order to accurately form the base concave groove **401** having a trapezoidal cross section, the position of the mask **452** is adjusted on the (100) plane of the base **400** made of silicon such that the longitudinal direction of the groove opening **452a** of the mask **452** becomes horizontal or vertical to the 〈110〉 direction of the base **400**. Then, the etching rate of the (111) plane, which is the wall face of the base concave groove **401** and the base mark becomes about 1/100 of the etching rate of the (100) plane, which is the bottom face thereof. Thus, when the (111) plane is exposed during etching, etching substantially stops. Accordingly, even if the base **400** is etched to simultaneously form the base concave groove **401** and the base mark from the groove opening **452a** and the mark opening **452b** of the mask **452** having mutually different sizes, a pattern can be formed accurately. That is to say, the base concave groove **401** extending longitudinally in the optical axis direction and pyramid shaped base mark can be simultaneously formed by etching. In this case, if the width size of the groove opening **452a** of the mask **452** is set at an appropriate value and etching is stopped when the depth of the base concave groove **401** reaches a desired value, then the base concave groove **401** can have a desired trapezoidal shape. Although some part of the base **400** underlying the mask **452** is over-etched to a certain degree, a very fine and accurate pattern can be formed by controlling the width size of the groove opening **452a** of the mask **452** and the etching time.

According to the primary feature of the sixth embodiment, the first base marks **405** for positioning the semiconductor laser device **410** and the second base marks **406** for positioning the monitoring light-receiving device **420** can be formed by using the same photo mask as that used for the base concave groove **401** during the same etching process. Thus, no positional misalignment occurs between the first and second base marks **405** and **406** and the base concave groove **401**. As a result, the semiconductor laser device **410** and the monitoring light-receiving device **420** can be mounted with an optical axis deviation of only 1 µm or less with respect to the base concave groove **401**.

In addition, since the first and second base marks **405** and **406** are formed by etching, the edges thereof are sharper than those of the marks formed by metal vapor deposition. Thus, these marks can form an excellent pattern for recognizing an image.

Moreover, since the first and second base marks **405** and **406** are formed by using the same photo mask as that used for the base concave groove **401** during the same etching process, no extra process is especially required for forming these marks and this embodiment is also cost effective.

In the case of forming the first and second base marks **405** and **406** so as to have a width size of about 1 to 2 µm or a size of 1 µm or less, a desired pattern cannot be obtained through etching only by setting the width size of the mark openings **452a** of the mask **452** at about 1 to 2 µm or 1 µm or less. The reasons are as follows. Even when the line widths of the first and second base marks **405** and **406** are designed at about 1 to 2 µm or 1 µm or less, the first and second base marks **405** and **406** are likely to be over-etched during etching the base concave groove **401**, because the width size of the base concave groove **401** is as large as about 400 to 200 µm. As a result, the line widths of the first and second base marks **405** and **406** become larger than the widths of the mark openings **452b** of the mask **452** by several µm.

Furthermore, if the width of the mark openings **452b** of the mask **452** is set at 5 µm or less, the mark openings **452b** are possibly clogged with bubbles generated during etching. Since some regions are etched but others are not because of this phenomenon, the resulting pattern is sometimes deformed. Thus, it is extremely difficult to form the first and second base marks **405** and **406** with a width size of 5 µm or less by etching.

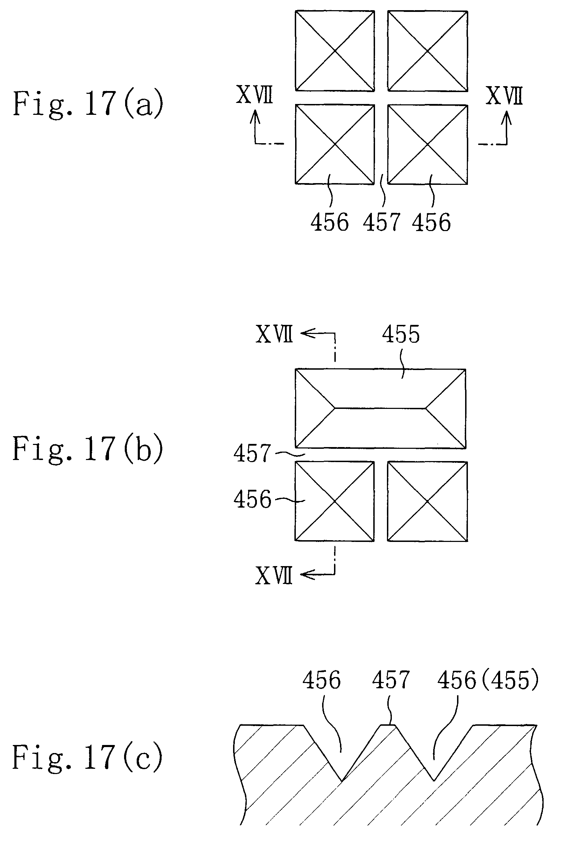

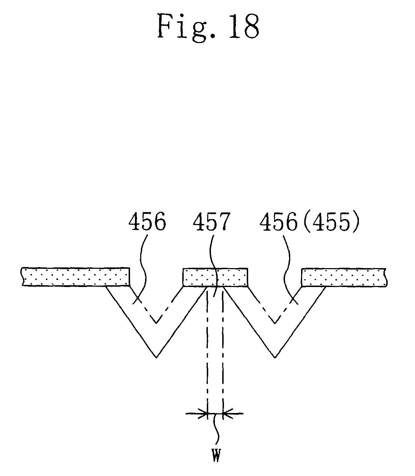

Thus, as shown in Figures **17(a)** through **17(c)**, the first and second base marks **405** and **406** can be formed by forming a plurality of V-shaped grooves **455** or pyramid-shaped pits **456** so that these grooves and pits are adjacent to each other and by using the non-etched regions **457** between these V-shaped grooves **455** and pyramid-shaped pits **456**. It is noted that Figure **17(c)** is a cross-sectional view taken along the line **XVII-XVII** of Figures **17(a)** and **17(b)**. In this case, by utilizing over-etching as shown in Figure **18**, a mark pattern can be easily formed of the non-etched region **457** having a width **w** of about 1 to about 2 µm. Also, if the amount of over-etching is controlled precisely, a mark pattern having a width of 1 µm or less can be formed.

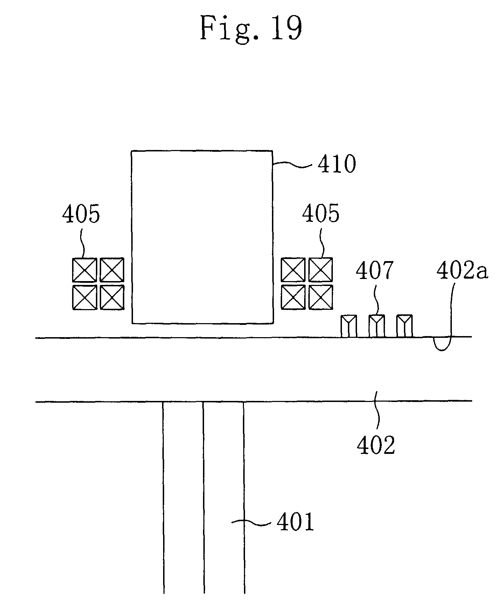

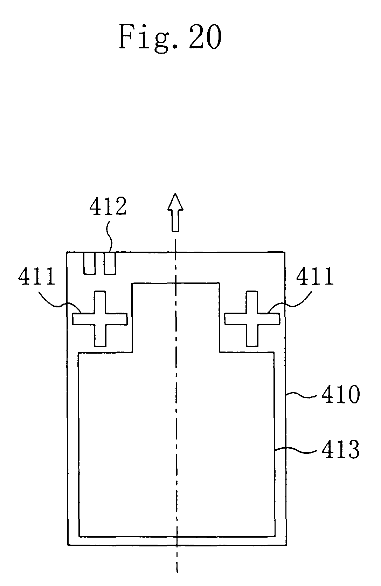

The second feature of the sixth embodiment lies in that a third base mark **407** for positioning the semiconductor laser device **410** in the optical axis direction is formed in the edge portion of the stopper wall face **402a** of the cut recess **402** of the base **400** as shown in Figure **19**. The second feature of the sixth embodiment also lies in that a pair of cross-shaped first laser marks **411** are formed on both sides of an active region (indicated by the one-dot-chain) on the reverse surface of the semiconductor laser device **410** at the positions symmetric to the active region, and a second laser mark **412** is further formed in an edge portion on the reverse surface of the semiconductor laser device **410** closer to the laser light emission end face as shown in Figure **20**. In Figure **20**, the reference numeral **413** denotes a metal electrode formed on the reverse surface of the semiconductor laser device **410**.

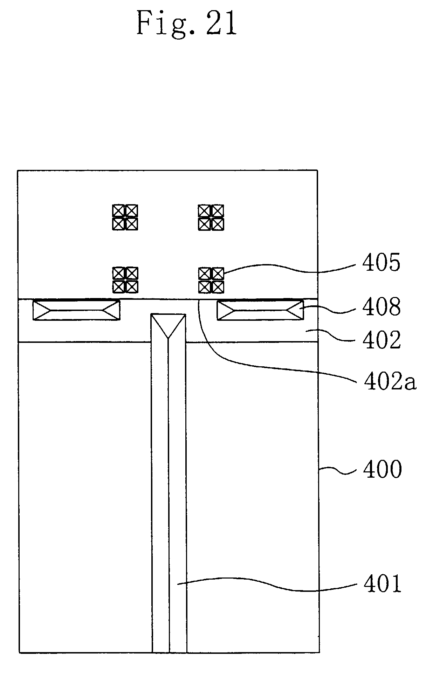

Since the third base mark **407** for positioning the semiconductor laser device **410** in the optical axis direction is formed in the edge portion of the stopper wall face **402a** of the cut recess **402** of the base **400**, the cut recess **402** needs to be diced with high accuracy with respect to the position of the semiconductor laser device **410** in the optical axis direction. Thus, as shown in Figure **21**, groove forming marks **408** are formed in the edge portion on the bottom of the cut recess **402** of the base **400** closer to the stopper wall face **402a**.

### EMBODIMENT 7

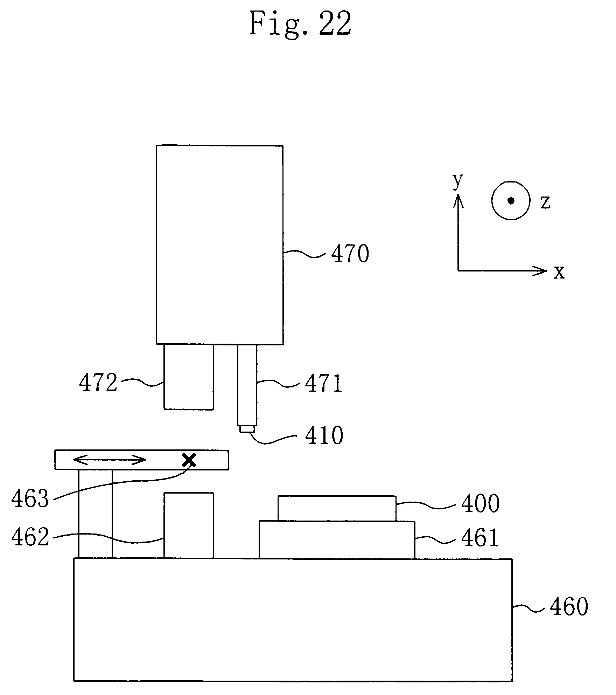

Hereinafter, a process step of mounting the semiconductor laser device **410** onto the base **400** in the method for fabricating the optical semiconductor module of the sixth embodiment will be described as the seventh embodiment with reference to Figures **22** to **24**.

Figure **22** is a schematic representation of a mounting apparatus for mounting the semiconductor laser device **410** onto the base **400**. A lower stage **460** is movable in any of the X-axis, Y-axis and Z-axis directions. On the lower stage **460**, a substrate heater **461** for supporting the base **400** and for heating the base **400** supported thereon, a lower CCD camera **462** having a coaxial white light source and a stage calibration marker **463** are provided. An upper stage **470** movable in the Y-axis direction is disposed above the lower stage **460**. On the upper stage **470**, a securing tool **471** for supporting the semiconductor laser device **410** and for securing the supported semiconductor laser device **410** to the base **400**, and an upper CCD camera **472** having a coaxial white light source are provided. The stage calibration marker **463** is provided for calibrating the relative positions (i.e., matching the positions of the origins) of the lower stage **460** and the upper stage **470**.

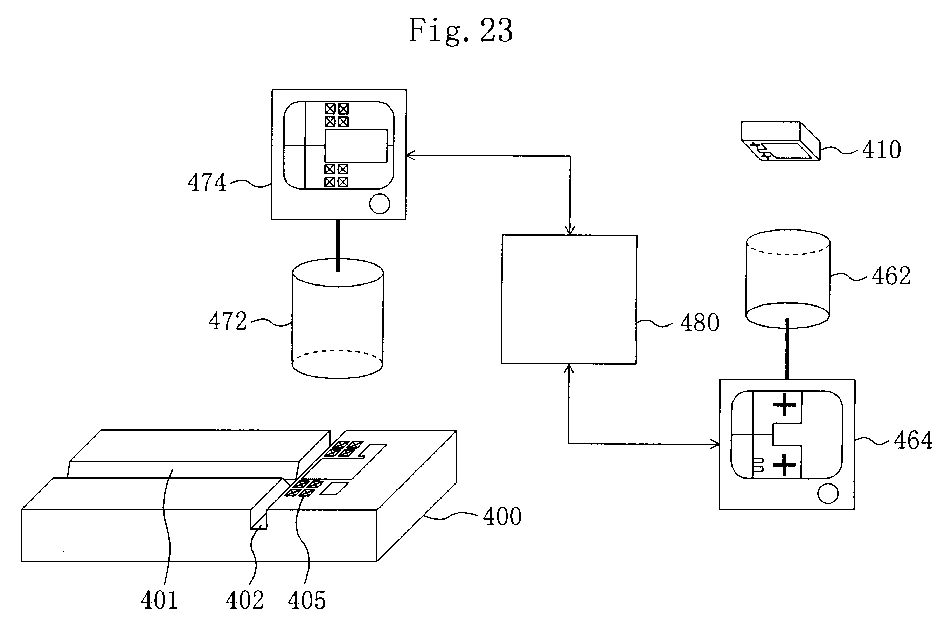

Figure **23** is a schematic representation illustrating the process step of mounting the semiconductor laser device **410** onto the base **400**. In Figure **23**, the reference numeral **464** denotes a lower monitor for displaying an image recognized by the lower CCD camera **462** thereon. **474** denotes an upper monitor for displaying an image recognized by the upper CCD camera **472** thereon. **480** denotes a controller for receiving the images recognized by the lower CCD camera **462** and the upper CCD camera **472** as inputs and thereby driving the lower and upper stages **460** and **470**.

Also, the stage calibration marker **463** is observed by the lower and upper CCD cameras **462** and **472** simultaneously, thereby recognizing the relative positions of the lower and upper stages **460** and **470**.

Next, the lower CCD camera **462** recognizes the pair of first laser marks **411** and the second laser mark **412** of the semiconductor laser device **410** as images, thereby obtaining and storing the information about the position of the semiconductor laser device **410** in the X-axis direction, the position of the laser device in the Z-axis direction and the offset angle θ with respect to the X-axis.

Hereinafter, it will be described how the lower CCD camera **462** recognizes the pair of first laser marks **411** and the second laser mark **412** of the semiconductor laser device **410** as images to obtain the information about the position of the semiconductor laser device **410** in the X-axis direction, the position of the laser device in the Z-axis direction and the offset angle θ with respect to the-X axis with reference to Figure **20** and Figures **22** through **24**.

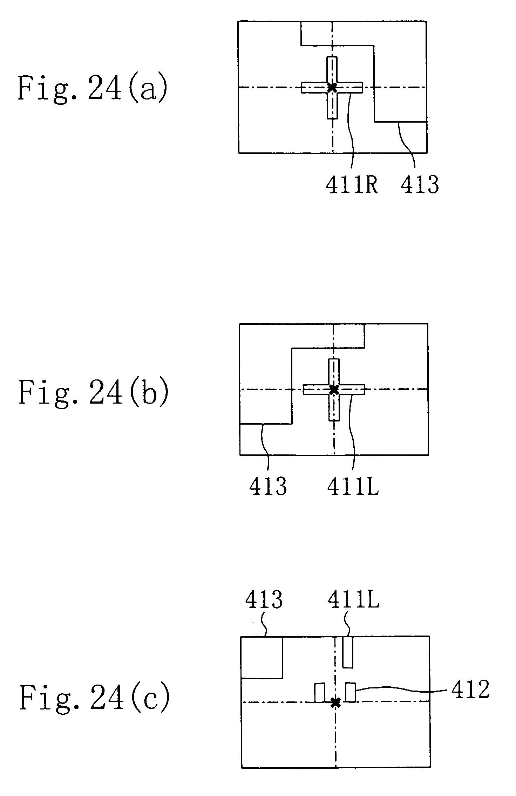

First, as shown in Figure **24(a)**, the center of the right laser mark **411R** of the pair of first laser marks **411** is recognized and stored as an image and then the lower stage **460** is moved. Next, as shown in Figure **24(b)**, the center of the left laser mark **411L** of the pair of first laser marks **411** is recognized and stored as an image.

Then, the position of the semiconductor laser device **410** in the X-axis direction and the offset angle θ with respect to the X-axis are recognized based on the positions of the centers of the right and left laser marks **411R** and **411L**, and the X coordinate of the semiconductor laser device **410** on the X-Z plane and the offset angle θ with respect to the X-axis are stored.

Subsequently, the lower stage **460** is moved and the center of the second laser mark **412** is recognized as an image as shown in Figure **24(c)** and the Z coordinate of the semiconductor laser device **410** on the X-Z plane is stored.

Next, the upper CCD camera **472** recognizes the first base marks **405** and the third base marks **407** of the base **400** as images, thereby obtaining the information about the position of the base **400** in the X-axis direction, the position thereof in the Z-axis direction and the offset angle θ with respect to the X-axis in the same way.

Then, the controller **480** rotates the lower stage **460** such that the offset angle θ of the base **400** with respect to the X-axis becomes equal to the offset angle θ of the semiconductor laser device **400** with respect to the X-axis. Thereafter, the controller **480** moves the lower stage **460** in the X-axis and Z-axis directions such that the X and Z coordinates of the semiconductor laser device **410** become equal to those of the base **400**.

Finally, the controller **480** moves the upper stage **470** in the Y-axis direction such that the Y coordinate of the semiconductor laser device **410** becomes equal to that of the base **400**, and the securing tool **471** secures the semiconductor laser device **410** to the base **400**.

In the seventh embodiment, the stage calibration marker **463** is observed by the lower and upper CCD cameras **462** and **472** simultaneously, and the relative positions of the lower and upper stages **460** and **470** are recognized. Then, the lower CCD camera **462** recognizes the respective marks of the semiconductor laser device **410** and the upper CCD camera **472** recognizes the respective marks of the base **400**. Thus, the relative positions of the semiconductor laser device **410** and the base **400** can be determined very precisely. In addition, since the lower CCD camera **462** recognizes the respective marks of the semiconductor laser device **410** and the upper CCD camera **472** recognizes the respective marks of the base **400**, a single CCD camera is not required to recognize the respective marks of the semiconductor laser device **410** and the base **400**, which are located far away from each other. Thus, the marks of either the semiconductor laser device **410** or the base **400** are not defocused and the resulting images are not blurred.

Thus, in the seventh embodiment, it is possible to mount the semiconductor laser device **410** onto the base **400** while satisfying the precision of 1 µm or less in the direction vertical to the optical axis on the plane parallel to the surface of the base **400** (i.e., the X-axis direction) and the precision of about 1 to about 2 µm in the optical axis direction (i.e., the Z-axis direction). In accordance with conventional methods, the distance between the emission side face of the semiconductor laser device **410** and the incidence end face of the optical fiber **430** is variable to a large degree. However, in this embodiment, since the distance can be controlled precisely, the variation in distance in the optical axis direction can be reduced from several to ten-odd µm (conventional methods) to about 1 µm to about 2 µm.

Moreover, in the seventh embodiment, since the distance between the emission side face of the semiconductor laser device **410** and the incidence end face of the optical fiber **430** can be reduced to about 1 µm to about 2 µm, the laser light emitted from the semiconductor laser device **410** can be coupled to the incidence end face of the optical fiber **430** with high coupling efficiency. The reasons why the laser light emitted from the semiconductor laser device **410** can be coupled to the incidence end face of the optical fiber **430** with high coupling efficiency by shortening the distance between the emission side face of the semiconductor laser device **410** and the incidence end face of the optical fiber **430** will be described later.

Though the description thereof has been omitted herein, the monitoring light-receiving device **420** is also secured to the base **400** in the same way as in the semiconductor laser device **410**.

### EMBODIMENT 8

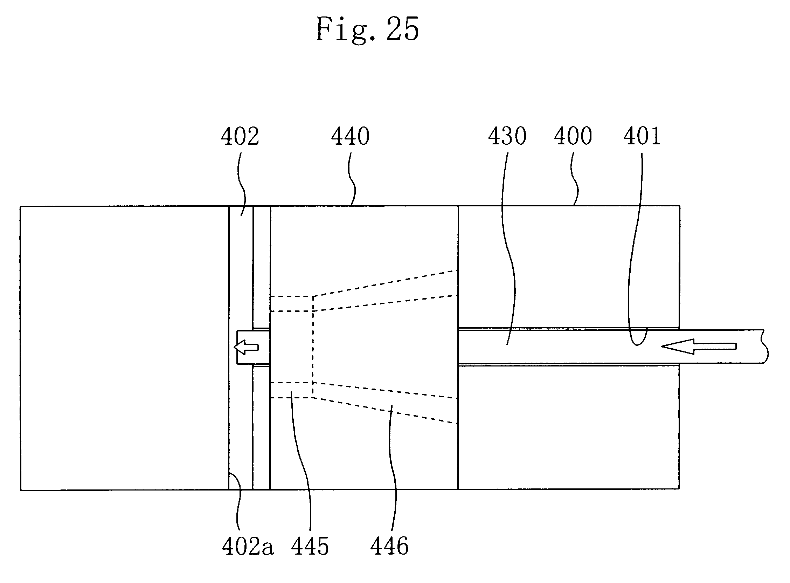

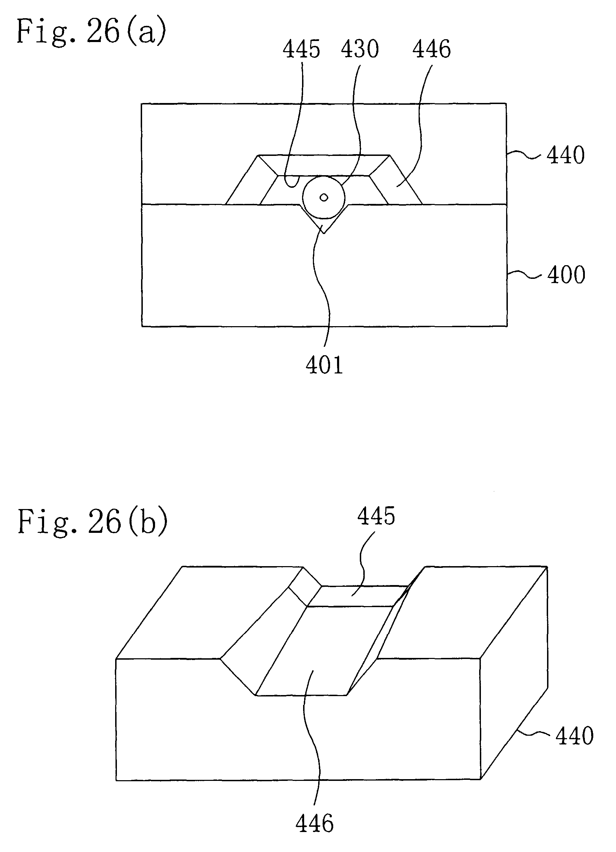

Hereinafter, a process step of mounting the optical fiber onto the base in the method for fabricating the optical semiconductor module will be described as the eighth embodiment with reference to Figure **25** and Figures **26(a)** and **26(b)**.

In the same way as in the sixth embodiment, the semiconductor laser device and the monitoring light-receiving device are mounted on the left part of the base **400** shown in Figure **25**, but the illustration thereof is omitted. As shown in Figure **25** and Figures **26(a)** and **26(b)**, a base concave groove **401**, having a trapezoidal cross section, is formed by etching in the base **400** so as to extend in the optical axis direction. A cut recess **402** having a rectangular cross section is formed in the base **400** by etching and dicing so as to extend vertically to the optical axis direction. A singlemode optical fiber **430** is installed in the base concave groove **401** with the end face of the optical fiber **430** in contact with the stopper wall face **402a** of the cut recess **402**. A fiber-pressing member **440** for pressing the optical fiber **430** installed in the base concave groove **401** to the base **400** is provided over the center portion of the base **400**.

The eighth embodiment is characterized in that the fiber-pressing member **440** includes: a pressing concave groove **445**, having a base longer than that of the base concave groove **401** and a constant cross-sectional area, for pressing the optical fiber **430** to the base **400**; and an introducing concave groove **446**, which is formed continuously with the pressing concave groove **445** and has a cross-sectional area increasing from left to right in Figure **25** just like a taper, for introducing the optical fiber **430**.

In the eighth embodiment, the end of the optical fiber **430** closer to the laser is inserted into an introducing portion formed by the base concave groove **401** and the introducing concave groove **446** of the fiber-pressing member **440**, and pushed toward the laser device to reach a pressing portion formed by the base concave groove **401** and the pressing concave groove **445** of the fiber-pressing member **440**. In such a configuration, the optical axis can be adjusted within the precision of 1 µm through passive alignment.

### EMBODIMENT 9

Hereinafter, a method for connecting optical fibers with each other will be described as the ninth embodiment.

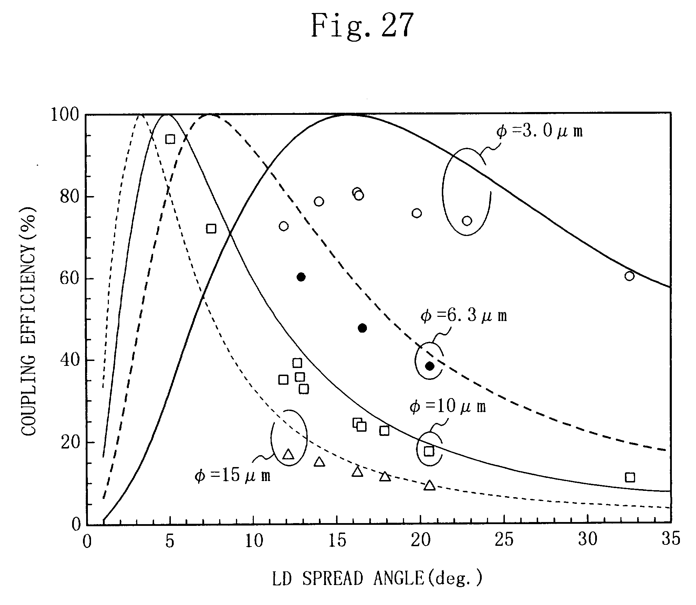

Figure **27** illustrates the calculation results (indicated by lines) and experiment results (indicated by points) of the coupling efficiency of a singlemode optical fiber with respect to the emission angle of a semiconductor laser device using the mode field diameter of the singlemode optical fiber as a parameter. When these calculations are performed, the distance between the semiconductor laser device and the optical fiber is assumed to be 0 µm.

As can be understood from Figure **27**, if the mode field diameter ⌀ of the optical fiber used as a parameter is 15 µ m, 10 µm, 6.3 µm or 3.0 µm, the coupling efficiency of the optical fiber reaches 100% theoretically in the region where the emission angle of the semiconductor laser device is in the range from 0 degrees to 30 degrees, irrespective of the mode field diameter.

This means that very high coupling efficiency, nearly 100%, can be attained by optimizing the emission angle of the semiconductor laser device and the mode field diameter of the optical fiber without using any lens system.

Also, as indicated by the experimental results, if the emission angle of the semiconductor laser device and the mode field diameter of the optical fiber are set at respectively quasi-optimum values in combination, coupling efficiency as high as over 70% can be attained. In this experiment, the coupling efficiency is at most about 70 to about 80%. This is presumably because the mode field pattern of a singlemode optical fiber is almost completely Gaussian, whereas the emission angles of the semiconductor laser device trace a pattern that cannot be called Gaussian.

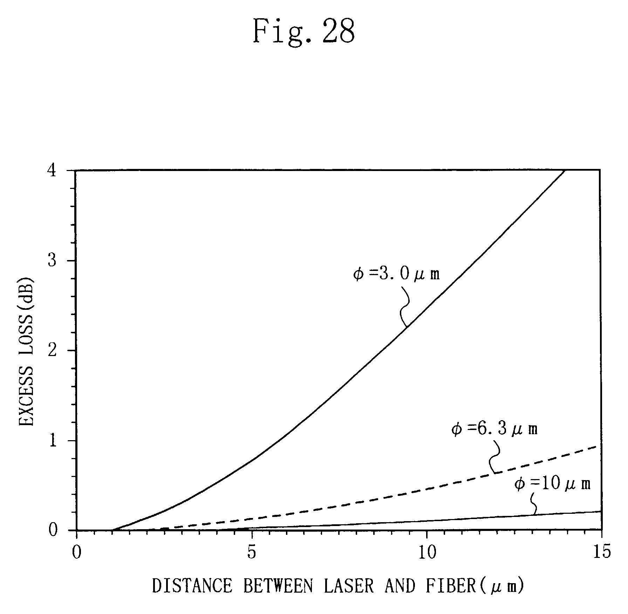

Figure **28** illustrates the calculation results of the excess loss with respect to the distance between the incidence end face of an optical fiber, having a mode field diameter ⌀ of 10 µm, 6.3 µm or 3.0 µm, and the emission side face of the semiconductor laser device having an emission angle of 15 degrees. As can be understood from Figure **28**, even if the distance is the same, the smaller the mode field diameter of the optical fiber is, the more drastically the coupling efficiency decreases.

However, in the vicinity of the domain where the distance in the Z-axis direction is 0 µm, the excess loss of the coupling efficiency is small in any optical fiber. Thus, it can be understood that the shorter the distance between the semiconductor laser device and the optical fiber is, the more drastically the excess loss can be reduced and the higher the coupling efficiency is.

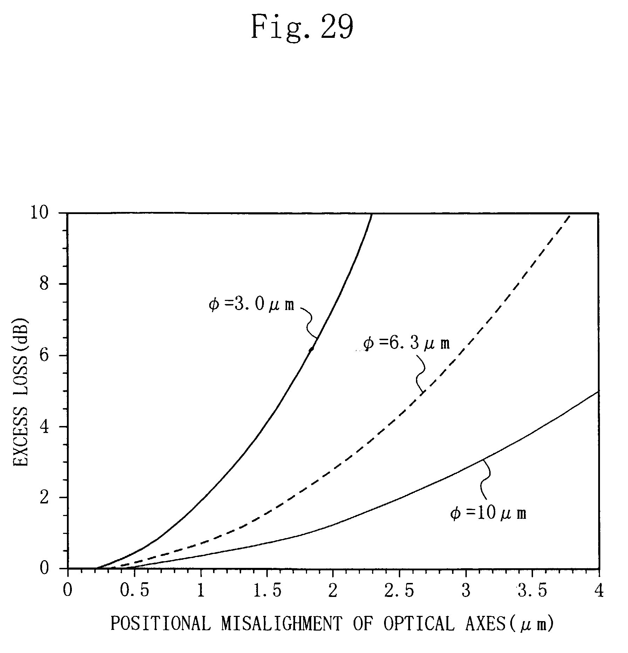

Figure **29** illustrates the relationship between the positional misalignment of the optical axes of the semiconductor laser device and a singlemode optical fiber, having a mode field diameter ⌀ of 10 µm, 6.3 µm or 3.0 µm, and the excess loss.

In the sixth and seventh embodiments, the positioning accuracy between the semiconductor laser device and the optical fiber in the directions vertical to the optical axis (i.e., the X- and Y-axis directions) is about 0.8 µm on average, while the positioning accuracy between the semiconductor laser device and the optical fiber in the optical axis direction (i.e., the Z-axis direction) is about 1.5 µm on average. Thus, if the mode field diameter ⌀ of the optical fiber is 6.3 µm, the coupling loss resulting from the positional misalignment can be suppressed to 0.8 dB or less. On the other hand, if the mode field diameter ⌀ of the optical fiber is 3.0 µm, the coupling loss resulting from the positional misalignment can be suppressed to 2.0 dB or less.

First, assume a case where a semiconductor laser device having an emission angle of 15 degrees is used and the positional misalignment between the semiconductor laser device and the optical fiber is zero. Then, if the mode field diameter ⌀ of the optical fiber is 6.3 µm, the coupling efficiency between the semiconductor laser device and the optical fiber is superior to the case where the mode field diameter ⌀ of the optical fiber is 10 µm by about 3 dB.

Thus, if the sum of the coupling loss and the connection loss is equal to or smaller than 1.5 dB, some superiority is supposedly attained. In the sixth and seventh embodiments, if the mode field diameter ⌀ of the optical fiber is 6.3 µm, the coupling loss resulting from the positional misalignment can be suppressed to 0.8 dB. Thus, if the connection loss of the fiber is suppressed to 0.7 dB or less, then some superiority can be attained.

Next, also assume a case where a semiconductor laser device having an emission angle of 15 degrees is used and the positional misalignment between the semiconductor laser device and the optical fiber is zero. Then, if the mode field diameter ⌀ of the optical fiber is 3.0 µm, the coupling efficiency between the semiconductor laser device and the optical fiber is superior to the case where the mode field diameter ⌀ of the optical fiber is 10 µm by about 2.0 dB.

Thus, if the sum of the coupling loss and the connection loss is equal to or smaller than 2.5 dB, some superiority is supposedly attained. In the sixth and seventh embodiments, if the mode field diameter ⌀ of the optical fiber is 3.0 µm, the coupling loss resulting from the positional misalignment can be suppressed to 2.0 dB. Thus, if the connection loss of the fiber is suppressed to 0.5 dB or less, then some superiority can be attained.

First, a case where an optical fiber having a core diameter of 3.0 µm is connected to an optical fiber having a core diameter of 10 µm will be described.

When the mode field diameters are different from each other by 120%, the connection loss during the connection of optical fibers corresponds to coupling efficiency of about 95% (-0.2 dB).

The ratio of the core diameter of 3.0 µm to the core diameter of 10 µm is about 330%. Thus, if a simple connection method is employed and the difference between adjacent cores is set at 120%, 6-stage buffering optical fibers are required to connect an optical fiber having a core diameter of 3.0 µm to an optical fiber having a core diameter of 10 µm. In such a case, the coupling loss reaches as high as 1.4 dB.

Thus, it is preferable to connect the optical fibers with each other through fusion bonding. In the case of connecting the optical fibers by fusion bonding, if the core diameter ratio is 160%, then the connection loss can be suppressed to about 0.5 dB. If the core diameter ratio is 150%, then the connection loss can be suppressed to about 0.3 dB. If the core diameter ratio is 140%, then the connection loss can be suppressed to about 0.2 dB. And if the core diameter ratio is 130%, then the connection loss can be suppressed to about 0.1 dB.

If the optical fibers are connected with each other by fusion bonding and the difference between core diameters is 130%, only four-stage buffering optical fibers are required to connect an optical fiber having a core diameter of 3.0 µm and an optical fiber having a core diameter of 10 µm. In such a case, the coupling loss can be suppressed to 0.6 dB.

Next, a case where an optical fiber having a core diameter of 6.3 µm is connected to an optical fiber having a core diameter of 10 µm will be described.

The ratio of the core diameter of 6.3 µm to the core diameter of 10 µm is about 160%. Thus, if a simple connection method is employed and the difference between core diameters is set at 120%, only one-stage buffering optical fiber is required to connect the optical fiber having a core diameter of 6.3 µm to the optical fiber having a core diameter of 10 µm. In such a case, the coupling loss can be suppressed to about 0.2 dB. It is noted that, in this case, even if these fibers are directly connected with each other, the resulting loss is not more than 0.5 dB.

### EMBODIMENT 10

Hereinafter, a method for mounting a semiconductor laser device having a double channel structure will be described as the tenth embodiment.

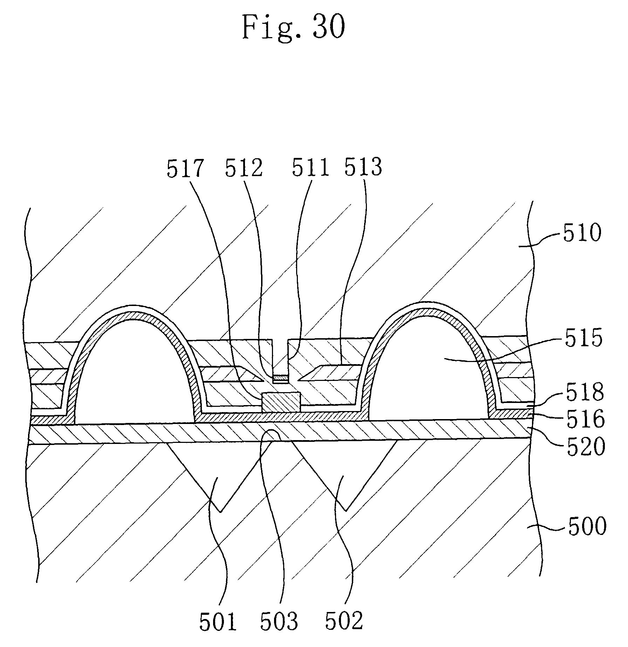

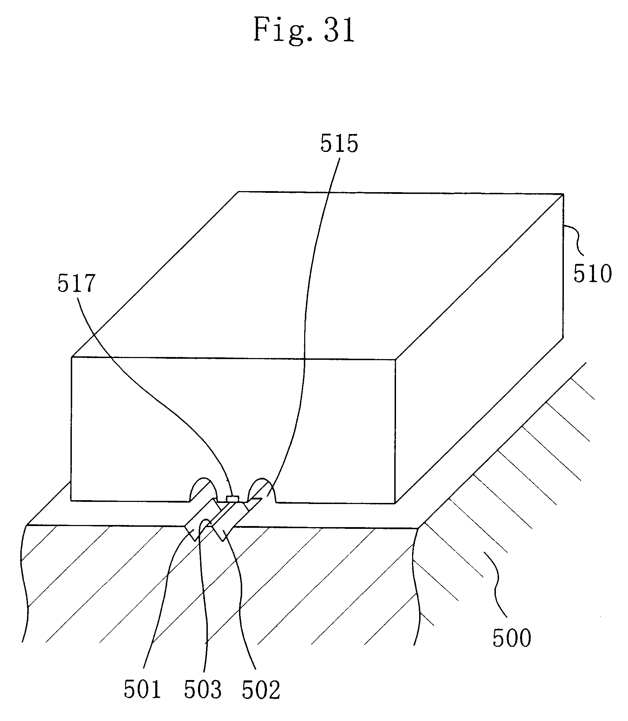

Figures **30** and **31** illustrate an optical laser module in which a semiconductor laser device **510** having a double channel structure is mounted on a base **500**. Figure **30** is a cross-sectional view thereof, while Figure **31** is a perspective view thereof.

As shown in Figure **30**, the semiconductor laser device **510** is secured to the surface of the base **500** via solder **520**. In the body of the semiconductor laser device **510**, a mesa-shaped stripe region **511**, an active layer **512** and a current blocking layer **513** are formed. On the bottom of the semiconductor laser device **510**, a pair of concave portions **515** are formed so as to sandwich the active layer **512** therebetween. A metal film **516** is formed over the entire bottom surface of the semiconductor laser device **510** as well as over the concave portions **515**. An electrode **517** is formed over the metal film **516** and under the active layer **512**. An insulating film **518** is formed between the metal film **516** and the body of the semiconductor laser device **510**.

On the other hand, in the upper surface of the base **500**, first and second V-shaped grooves **501** and **502**, each having a V-shaped cross section, are formed on both sides of the active layer **512** of the semiconductor laser device **510** by using the same mask as that used for the base concave groove **101** shown in Figure **1** and by performing the same etching process. Thus, a convex portion **503** having a trapezoidal cross section is residual in the non-etched region between the first and second V-shaped grooves **501** and **502** on the upper surface of the base **500**. The first and second V-shaped grooves **501** and **502** are preferably formed by the method described with reference to Figures **16** and **17**, in particular the method utilizing over-etching. In such a case, the convex portion **503** can have an extremely fine width size, e.g., 1 µm or less.

In the tenth embodiment, the convex portion **503** is formed by using the same mask as that used for the concave grooves of the base for installing the optical fibers therein and by performing the same etching process. Thus, no positional misalignment is caused between the convex portion **503** and any of the concave grooves for installing the optical fibers therein. Accordingly, if the semiconductor laser device **510** is secured to the base **500** while aligning the center line of the semiconductor laser device **510** with the convex portion **503**, the semiconductor laser device **510** can be mounted onto the base **500** without causing any positional misalignment in the direction vertical to the optical axis. In aligning the positions of the center line of the semiconductor laser device **510** with the convex portion **503** of the base **500**, the positional relationship therebetween can be confirmed easily by enlarging them with a stereoscopic microscope or the like.

## Claims

1. An optical transmitter/receiver apparatus comprising:
an optical fiber for transmitting an optical signal to be transmitted and receiving an optical signal to be received therethrough;
a first base including an optical signal transmitting region and an optical signal receiving region that are spaced from each other, the first base further including a fiber end supporting region located between the optical signal transmitting region and the optical signal receiving region;
a semiconductor laser device, secured to the optical signal transmitting region of the first base, for emitting the optical signal to be transmitted;
fiber end supporting means, formed in the fiber end supporting region of the first base, for supporting one end of the optical fiber, the optical signal to be transmitted that has been emitted from the semiconductor laser device being incident onto the end of the optical fiber;
a second base, secured to the optical signal receiving region of the first base, for supporting a body of the optical fiber;
a reflective filter, supported by being inserted into the second base and the body of the optical fiber, for transmitting the optical signal to be transmitted that has been emitted from the semiconductor laser device, and for reflecting the optical signal to be received that has been incident through the other end of the optical fiber; and
a light-receiving device, secured to the second base, for receiving the optical signal to be received that has been reflected by the reflective filter.

2. The optical transmitter/receiver apparatus of Claim 1, wherein the first base comprises optical-axis-direction positioning means for regulating a position of the one end of the optical fiber in an optical axis direction.

3. The optical transmitter/receiver apparatus of Claim 1, wherein the fiber end supporting means comprises on-vertical-plane positioning means for regulating a position of the one end of the optical fiber on a plane vertical to an optical axis.

4. The optical transmitter/receiver apparatus of Claim 3, wherein the on-vertical-plane positioning means comprises:
a concave groove being formed in the fiber end supporting region of the first base so as to extend in an optical axis direction, having a pair of walls coming closer to each other in a direction from an opening to a bottom and supporting the one end of the optical fiber; and
a pressing member, secured over the concave groove of the first base, for pressing the one end of the optical fiber supported by the concave groove onto the pair of walls of the concave groove.

5. The optical transmitter/receiver apparatus of Claim 1, wherein the fiber end supporting means comprises:
a concave groove, formed in the fiber end supporting region of the first base so as to extend in an optical axis direction, for supporting the one end of the optical fiber; and
a resin-introducing groove, formed in the fiber end supporting region of the first base so as to extend in a direction intersecting the concave groove and to communicate with the concave groove, for introducing a supplied resin into the concave groove.

6. The optical transmitter/receiver apparatus of Claim 1, wherein the fiber end supporting means comprises:
a concave groove, formed in the fiber end supporting region of the first base so as to extend in an optical axis direction, for supporting the one end of the optical fiber; and
a resin-draining groove, formed in the fiber end supporting region of the first base so as to extend in a direction intersecting the concave groove and to communicate with the concave groove, for draining a resin supplied to the concave groove to the outside.

7. The optical transmitter/receiver apparatus of Claim 1, further comprising a reflective film, formed between the reflective filter and the light-receiving device, for reflecting the optical signal to be transmitted that has been emitted from the semiconductor laser device.

8. The optical transmitter/receiver apparatus of Claim 1, further comprising:
a wavelength selecting reflective filter, supported by being inserted into the body of the optical fiber and the second base at a position closer to the other end of the optical fiber than the reflective filter is, for transmitting the optical signal to be transmitted that has been emitted from the semiconductor laser device and for selectively reflecting an optical signal to be received on a predetermined wavelength band among a plurality of optical signals to be received on a plurality of wavelength bands, the optical signals having been incident through the other end of the optical fiber; and
a second light-receiving device, secured to the second base, for receiving the optical signal to be received that has been reflected by the wavelength selecting reflective filter.

9. The optical transmitter/receiver apparatus of Claim 8, further comprising
a filter, formed between the wavelength selecting reflective filter and the second light-receiving device, for selectively transmitting the optical signal to be received on the predetermined wavelength band.

10. An optical transmitter/receiver apparatus comprising:
an optical fiber for transmitting an optical signal to be transmitted and receiving an optical signal to be received therethrough;
a base including an optical signal transmitting region and an optical signal receiving region that are spaced from each other, the base further including a fiber end supporting region located between the optical signal transmitting region and the optical signal receiving region;
a semiconductor laser device, secured to the optical signal transmitting region of the base, for emitting the optical signal to be transmitted;
optical-axis-direction positioning means, formed in the optical signal transmitting region of the base, for regulating a position of one end of the optical fiber in an optical axis direction, the optical signal to be transmitted that has been emitted from the semiconductor laser device being incident onto the one end;
fiber end supporting means, formed in the fiber end supporting region of the base, for supporting the one end of the optical fiber, while regulating a position of the one end of the optical fiber on a plane vertical to the optical axis;
fiber body supporting means, formed in the optical signal receiving region of the base, for supporting the body of the optical fiber;
a reflective filter, supported by being inserted into the fiber body supporting means and the optical fiber, for transmitting the optical signal to be transmitted that has been emitted from the semiconductor laser device, and for reflecting the optical signal to be received that has been incident through the other end of the optical fiber; and
a light-receiving device, secured to the optical signal receiving region of the base, for receiving the optical signal to he received that has been reflected by the reflective filter.

11. The optical transmitter/receiver apparatus of Claim 10, wherein the fiber end supporting means comprises:
a concave groove being formed in the base so as to extend in the optical axis direction, having a pair of walls coming closer to each other in a direction from an opening to a bottom, and supporting the optical fiber; and
a pressing member, secured over the concave groove in the fiber end supporting region of the base, for pressing the one end of the optical fiber supported by the concave groove onto the pair of walls.

12. A method for fabricating an optical transmitter/receiver apparatus including an optical fiber for transmitting an optical signal to be transmitted and receiving an optical signal to be received therethrough,
the method comprising the steps of:
forming a optical fiber end supporting concave groove in a fiber end supporting region of a first base, the first base having mutually spaced optical signal transmitting region and optical signal receiving region and the fiber end supporting region located between the optical signal transmitting and receiving regions, the concave groove having such a cross-sectional shape as to support one end of the optical fiber and extending in an optical axis direction;
securing a semiconductor laser device for emitting the optical signal to be transmitted onto the optical signal transmitting region of the first base;
forming an optical fiber body supporting concave groove in a second base, the optical fiber body supporting concave groove having such a cross-sectional shape as to support the body of the optical fiber and extending in the optical axis direction;
securing the body of the optical fiber inside the optical fiber body supporting concave groove;
forming a cut recess in the second base and the body of the optical fiber, the cut recess extending in a direction vertical to the optical axis;
securing a reflective filter inside the cut recess, the reflective filter transmitting the optical signal to be transmitted that has been emitted from the semiconductor laser device and incident onto the one end of the optical fiber, and reflecting the optical signal to be received that has been incident through the other end of the optical fiber;
securing a light-receiving device above the optical fiber body supporting concave groove in the second base, the light-receiving device receiving the optical signal to be received that has been reflected by the reflective filter;
securing the one end of the optical fiber onto the optical fiber end supporting concave groove of the first base; and
securing the second base onto the optical signal receiving region of the first base, the body of the optical fiber, the reflective filter and the light-receiving device having been secured to the second base.

13. The method for fabricating an optical transmitter/receiver apparatus of Claim 12, wherein the step of securing the second base comprises the step of securing the second base onto the optical signal receiving region of the first base, while regulating a position of the one end of the optical fiber in the optical axis direction and a position of the optical fiber on a plane vertical to the optical axis.

14. The method for fabricating an optical transmitter/receiver apparatus of Claim 12, wherein the step of forming the concave groove comprises the step of forming a resin-introducing groove in the fiber end supporting region of the first base, the resin-introducing groove extending in a direction crossing the optical fiber end supporting concave groove and communicating with the optical fiber end supporting concave groove,
and wherein the step of securing the one end of the optical fiber comprises the step of securing the one end of the optical fiber onto the optical fiber end supporting concave groove of the first base with a resin, the resin being supplied through the resin-introducing groove into the optical fiber end supporting concave groove.

15. An optical semiconductor module comprising:
a base including a concave groove extending in an optical axis direction and a cut recess extending in a direction vertical to the optical axis;
a semiconductor laser device, secured to the base, for emitting semiconductor laser light;
an optical fiber for transmitting the laser light emitted by the semiconductor laser device therethrough, the optical fiber being installed in the concave groove of the base with an incidence end face of the optical fiber in contact with a wall of the cut recess, the wall being closer to the semiconductor laser device; and
an alignment mark, formed on the base, for aligning a position of the semiconductor laser device with a position of the base,
the alignment mark being formed through the same photolithography and etching processes as processes applied to the concave groove.

16. The optical semiconductor module of Claim 15, wherein the alignment mark comprises a pair of side alignment marks formed on both sides of a region of the base, to which region the semiconductor laser device is secured, so as to be symmetrically disposed with respect to the optical axis.

17. The optical semiconductor module of Claim 15, wherein the alignment mark comprises a base edge alignment mark formed on an edge portion of the wall of the cut recess of the base, the wall being closer to the semiconductor laser device.

18. The optical semiconductor module of Claim 15, wherein the alignment mark comprises:
a pair of side alignment marks formed on both sides of a region of the base, to which region the semiconductor laser device is secured, so as to be symmetrically disposed with respect to the optical axis; and
a base edge alignment mark formed on an edge portion of the wall of the cut recess of the base, the wall being closer to the semiconductor laser device.

19. The optical semiconductor module of Claim 15, further comprising a laser edge alignment mark, formed on an edge portion of a bottom surface of the semiconductor laser device, for aligning a position of the semiconductor laser device with a position of the base, the edge portion of the bottom surface being closer to the optical fiber.

20. The optical semiconductor module of Claim 19, wherein the alignment mark comprises a base edge alignment mark formed on an edge portion of the wall of the cut recess of the base, the wall being closer to the semiconductor laser device.

21. An optical semiconductor module comprising:
a base including a concave groove extending in the direction of an optical axis;
a semiconductor laser device having a double channel structure, being secured to the base and emitting semiconductor laser light;
an optical fiber, installed in the concave groove of the base, for transmitting the laser light emitted by the semiconductor laser device therethrough; and
an alignment mark, formed on the base, for aligning a position of the semiconductor laser device with a position of the base,
the alignment mark including a convex alignment mark having a convex portion and existing between a pair of grooves each having a V-shaped cross section, the grooves being formed at positions symmetric to the optical axis in a region of the base, to which region the semiconductor laser device is secured.

22. The optical semiconductor module of Claim 21, wherein the pair of grooves are formed through the same photolithography and etching processes as processes applied to the concave groove.
